(19)

(11) EP 4 068 767 A1

(12) EUROPEAN PATENT APPLICATION
published in accordance with Art. 153(4) EPC

(43) Date of publication:
**05.10.2022 Bulletin 2022/40**

(21) Application number: **20895286.1**

(22) Date of filing: **02.12.2020**

(51) International Patent Classification (IPC):
***H04N 13/302*** (2018.01) ***H04N 13/305*** (2018.01)
***H04N 13/366*** (2018.01) ***H04N 13/111*** (2018.01)
***H04N 13/139*** (2018.01) ***H04N 13/122*** (2018.01)
***H04N 19/597*** (2014.01)

(52) Cooperative Patent Classification (CPC):
**H04N 13/111; H04N 13/122; H04N 13/139; H04N 13/302; H04N 13/305; H04N 13/366; H04N 19/597**

(86) International application number:
**PCT/CN2020/133335**

(87) International publication number:
**WO 2021/110041 (10.06.2021 Gazette 2021/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.12.2019 CN 201911231427**

(71) Applicants:
- **Beijing Ivisual 3D Technology Co., Ltd.**
  **Beijing 100055 (CN)**
- **Visiotech Ventures Pte. Ltd.**
  **Singapore 188979 (SG)**

(72) Inventors:
- **DIAO, Honghao**
  **Beijing 100055 (CN)**
- **HUANG, Lingxi**
  **Singapore 188979 (SG)**

(74) Representative: **Manitz Finsterwald Patent- und Rechtsanwaltspartnerschaft mbB**
**Martin-Greif-Strasse 1**
**80336 München (DE)**

# (54) MULTI-VIEWPOINT 3D DISPLAY SCREEN AND MULTI-VIEWPOINT 3D DISPLAY TERMINAL

(57) The present application relates to the field of 3D images, and discloses a multi-viewpoint 3D display screen, comprising a display panel, comprising a plurality of composite pixels, wherein each composite pixel comprises a plurality of composite subpixels, and each composite subpixel comprises a plurality of subpixels corresponding to a plurality of viewpoints; and a plurality of gratings, parallelly arranged on the plurality of composite pixels, wherein each grating comprises a first oblique edge and a second oblique edge and is obliquely covered on the plurality of composite pixels, so that the first oblique edge and the second oblique edge intersect with the composite subpixels to define an inclination angle; in the composite subpixels, subpixels intersecting with or close to the first oblique edge form first terminal subpixels, and subpixels intersecting with or close to the second oblique edge form second terminal subpixels; and the inclination angle enables that: along an extension direction of the first oblique edge, colors of the first terminal subpixels, which are in at least a part of adjacent composite pixels and have the largest overlapping area with each grating, are different. According to the present application, the problems of red vignetting or vignetting of other colors in 3D display can be eliminated. The present application further discloses a multi-viewpoint 3D display terminal.

CP
i=6
R R R R R R
G G G G G G
B B B B B B
1212
CSP
121
1211
Multi-viewpoint 3D display terminal [1000]
Processor [101]
Register [102]
Video signal interface [140]
3D processing device [130]
Buffer [131]
Multi-viewpoint 3D display screen [100]
n
m
Fig. 1A



Processed by Luminess, 75001 PARIS (FR)

## Description

The present application claims priority to the Chinese Patent Application with an application number of 2019112314271 and a title of "Multi-Viewpoint Naked-eye 3D Display Screen and Multi-Viewpoint Naked-eye 3D Display Terminal", filed to China National Intellectual Property Administration on December 5th, 2019, the disclosures of which are hereby incorporated by reference.

### Technical Field

The present application relates to the field of 3D images, and for example, relates to a multi-viewpoint 3D display screen and a multi-viewpoint 3D display terminal.

### Background

In a structure of a conventional 3D display, gratings are only arranged on one side or both sides of a 2D display panel to provide a 3D display effect, so that definitions of a pixel, a subpixel and resolution continue to use ideas of a 2D display. The dilemma problems of reduction of the resolution and sharp increase of a calculating amount of rendering are caused.

Since the sum of the resolution of the 2D display panel is a constant value, the resolution is sharply decreased, and for example, column resolution is reduced to 1/N of original resolution. Due to the arrangement of pixels of a multi-viewpoint display, different reduction times of the resolution in horizontal and vertical directions are further caused.

If high definition display needs to be maintained, under the condition of an N-viewpoint 3D display device providing high definition, for example N times that of a 2D display device, transmission bandwidth from a terminal required to be occupied to the display is also multiplied by N times, leading to too large signal transmission quantity. In addition, pixel-level rendering for N-times high resolution images will seriously occupy own computing resources of the terminal or the display, causing great reduction of performance.

In addition, since transmission and display of 3D images or videos are realized based on the 2D display panel, the problems of multiple times of format adjustment and display adaptation of the images or videos further probably exist. On the one hand, further increase of the calculating amount of rendering is probably caused, and on the other hand, a display effect of the 3D images or videos is probably affected.

The background is only for the convenience of understanding related technologies in the field, and is not regarded as an acknowledgment of the existing technology.

### Summary

In order to provide a basic understanding of some aspects of the disclosed embodiments, a brief summary of some embodiments is given below. The brief summary is not intended to identify key/important components or describe the scope of protection of the present invention, but to be a preface to the following detailed description.

Embodiments of the present disclosure provide a multi-viewpoint 3D display screen and a multi-viewpoint 3D display terminal, so as to overcome or relieve at least some of the above mentioned problems.

In some embodiments, a multi-viewpoint 3D display screen is provided, comprising a display panel, comprising a plurality of composite pixels, wherein each composite pixel of the plurality of composite pixels comprises a plurality of composite subpixels, and each composite subpixel of the plurality of composite subpixels comprises a plurality of subpixels corresponding to a plurality of viewpoints of the multi-viewpoint 3D display screen; and a plurality of gratings, parallelly arranged on the plurality of composite pixels, wherein each grating of the plurality of gratings comprises a first oblique edge and a second oblique edge, and each grating is obliquely covered on the plurality of composite pixels so that the first oblique edge and the second oblique edge intersect with each composite subpixel to define an inclination angle; wherein in each composite subpixel, subpixels intersecting with or close to the first oblique edge form first terminal subpixels, and subpixels intersecting with or close to the second oblique edge form second terminal subpixels; and the inclination angle is configured to enable that: along an extension direction of the first oblique edge of each grating, colors of the first terminal subpixels, which are in at least a part of adjacent composite pixels and have the largest overlapping area with each grating, are different.

In some embodiments, the inclination angle is configured to enable that: along an extension direction of the second oblique edge of each grating, colors of the second terminal subpixels, which are in at least a part of adjacent composite pixels and have the largest overlapping area with each grating, are different.

In some embodiments, the first terminal subpixels form subpixels corresponding to beginning viewpoints, wherein in each composite subpixel, when a covered area of subpixels intersecting with the first oblique edge is greater than or equal to an area threshold, the subpixels intersecting with the first oblique edge form the subpixels corresponding to the beginning viewpoints; or in each composite subpixel, when a covered area of subpixels intersecting with the first oblique edge is less than the area threshold, a next subpixel adjacent to the subpixels intersecting with the first oblique edge forms a subpixel corresponding to the beginning viewpoints.

In some embodiments, the second terminal subpixels form subpixels corresponding to ending viewpoints, wherein in each composite subpixel, when a covered area of subpixels intersecting with the second oblique edge is greater than or equal to the area threshold, the subpixels intersecting with the second oblique edge form the subpixels corresponding to the ending viewpoints; or in each composite subpixel, when a covered area o subpixels intersecting with the second oblique edge is less than the area threshold, a previous subpixel adjacent to the subpixels intersecting with the second oblique edge forms a subpixel corresponding to the ending viewpoints.

In some embodiments, sizes of each composite pixel in a length direction and a width direction are the same.

In some embodiments, the plurality of gratings comprise a plurality of cylindrical prism gratings.

In some embodiments, each composite subpixel comprises a plurality of subpixels in a form of a single row or in a form of array.

In some embodiments, the plurality of composite subpixels comprise at least one of red composite subpixels, green composite subpixels and blue composite subpixels.

In some embodiments, the inclination angle $\theta$ meets: $\tan(\theta)=\pm 3/(i\times k)$, wherein k is not divided evenly by 3, and i represents a number of viewpoints; or $\tan(\theta)=\pm 1\backslash 8$.

In some embodiments, a multi-viewpoint 3D display terminal is provided, comprising the above multi-viewpoint 3D display screen.

In some embodiments, the multi-viewpoint 3D display terminal further comprises a 3D processing device, configured to render corresponding subpixels in the plurality of composite subpixels in the multi-viewpoint 3D display screen based on 3D signals.

In some embodiments, the 3D processing device is further configured to perform displacement rendering for corresponding subpixels in the plurality of composite subpixels according to viewpoints corresponding to subpixels rendered currently and viewpoints corresponding to subpixels rendered subsequently.

In some embodiments, the multi-viewpoint 3D display terminal further comprises a memory, configured to store corresponding relationships of subpixels and viewpoints, wherein the 3D processing device is configured to acquire the corresponding relationships.

In some embodiments, the 3D processing device is a Field Programmable Gate Array (FPGA) chip or an Application Specific Integrated Circuit (ASIC) chip or an FPGA chipset or an ASIC chipset.

In some embodiments, the multi-viewpoint 3D display terminal further comprises an eye positioning data acquisition device, configured to acquire eye positioning data of a user.

The above general description and the description below are exemplary and explanatory only, and are not intended to limit the present application.

Description of Drawings

One or more embodiments are illustrated by the corresponding drawings, and the illustrations and drawings do not limit the embodiments. Elements having the same reference numerals in the drawings are shown as similar elements, and the drawings are not intended to limit the scale, wherein:

Figs. 1A-1C are structural schematic diagrams of a multi-viewpoint 3D display terminal according to embodiments of the present disclosure;
Fig. 2 is a structural schematic diagram of hardware of the multi-viewpoint 3D display terminal according to the embodiments of the present disclosure;
Fig. 3 is a structural schematic diagram of software of the multi-viewpoint 3D display terminal according to the embodiments of the present disclosure;
Figs. 4A-4B are schematic diagrams of a composite pixel according to the embodiments of the present disclosure;
Figs. 5A-5E are schematic diagrams of formats and contents of images included in video frames of 3D video signals according to the embodiments of the present disclosure;
Fig. 6 is a schematic diagram of arranging at least two 3D processing devices provided by the embodiments of the present disclosure;
Figs. 7A-7C are schematic diagrams of a hardware structure and composite pixels used for a multi-viewpoint 3D display screen according to the embodiments of the present disclosure;
Figs. 8A-8B are explanatory schematic diagrams of an inclination angle of an oblique edge of a grating used for the multi-viewpoint 3D display screen according to the embodiments of the present disclosure; and
Fig. 9 is a schematic diagram of a displacement rendering process of subpixels of the multi-viewpoint 3D display screen according to the embodiments of the present disclosure.

Reference numerals:

100: 3D display screen; 101: processor; 102: register; 110: display panel; 120: grating; CP: composite pixel; CSP: composite subpixel; P: subpixel; 121: grating edge; BWP: beginning viewpoint pixel; EWP: ending viewpoint pixel; $\theta$: inclination angle; 1211: first oblique edge; 1212: second oblique edge; 1000: multi-viewpoint 3D display terminal; 130: 3D processing device; 131: buffer; 140: video signal interface; 150: eye positioning device; 200: multi-viewpoint 3D display terminal; 201: processor; 202: external memory interface; 203: memory; 204: Universal Serial Bus (USB) interface; 205: charging management module; 206: power supply management module; 207: battery; 208: mobile communication module; 210: wireless communication module; 209 and 211: antennas; 212: audio module; 213: loudspeaker; 214: telephone receiver; 215: microphone; 216: earphone jack; 217: key; 218: motor; 219: indicator; 220: Subscriber Identity Module (SIM) card interface; 221: shooting unit; 230: sensor module; 2301: proximity light sensor; 2302: ambient light sensor; 2303: pressure sensor; 2304: air pressure sensor; 2305: magnetic sensor; 2306: gravity sensor; 2307: gyroscope sensor; 2308: acceleration sensor; 2309: distance sensor; 2310: temperature sensor; 2311: fingerprint sensor; 2312: touch sensor; 2313: bone conduction sensor; 224: codec; 310: application program layer; 320: framework layer; 330: core class library and runtime; 340: kernel layer; 400: composite pixel; 410, 420, 430, 470, 480 and 490: composite subpixels; 411, 421, 431, 471, 481 and 491: subpixels; 501, 502, 503 and 504: images; 505 and 506: composite images.

## Detailed Description

For more detailed understanding of characteristics and technical contents of embodiments of the present disclosure, the implementation of the embodiments of the present disclosure will be described in detail below with reference to the accompanying drawings, and the accompanying drawings are used for reference only, instead of limiting the embodiments of the present disclosure.

In some embodiments of the present disclosure, the present disclosure provides a multi-viewpoint 3D display screen (such as: a multi-viewpoint naked-eye 3D display screen), comprising:

a display panel, comprising a plurality of composite pixels, wherein each composite pixel of the plurality of composite pixels comprises a plurality of composite subpixels, each composite subpixel of the plurality of composite subpixels is composed of i subpixels of the same color, corresponding to i viewpoints, and i≥3; and

a plurality of gratings parallelly arranged on the plurality of composite pixels, wherein each grating of the plurality of gratings comprises a first oblique edge and a second oblique edge, and each grating of the plurality of gratings is obliquely covered on the plurality of composite pixels, so that the first oblique edge and the second oblique edge intersect with each composite subpixel of the composite pixels to define an inclination angle;

wherein in each composite subpixel of the plurality of composite pixels, subpixels intersecting with or close to the first oblique edge of each grating form first terminal subpixels, and subpixels intersecting with or close to the second oblique edge of each grating form second terminal subpixels;

the inclination angle of each grating is configured to enable that: along an extension direction of the first oblique edge of each grating, the colors of the first terminal subpixels, which are in at least a part of adjacent composite pixels and have the largest overlapping area with the grating, are different.

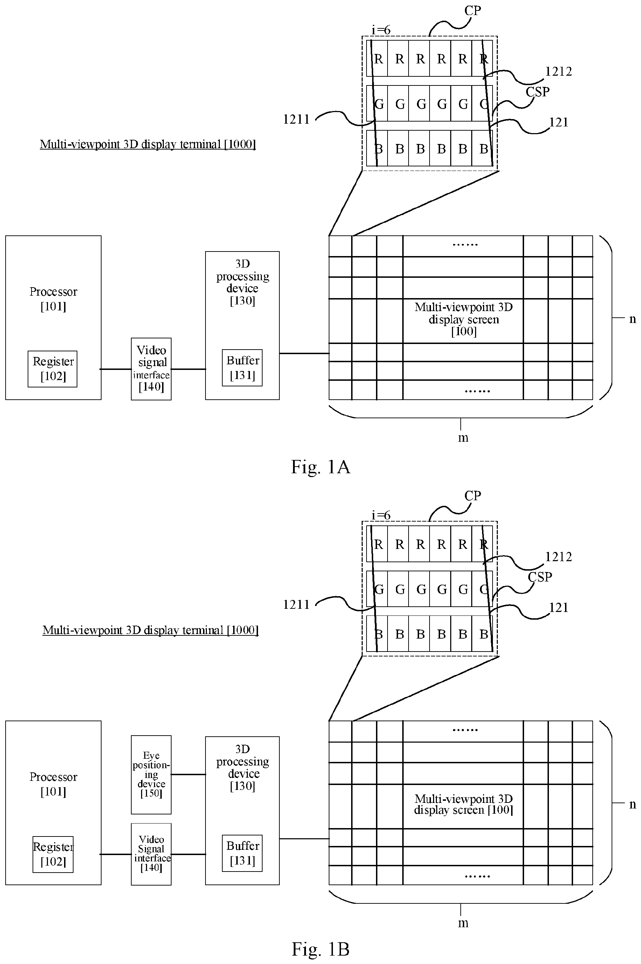

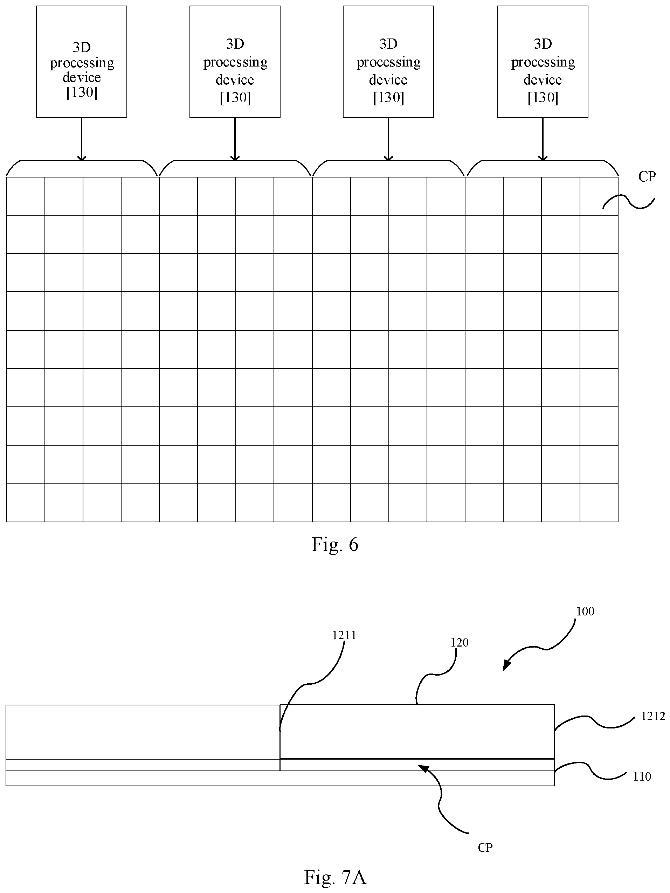

With reference to Fig. 1A and Figs. 7A-7C, in some embodiments of the present disclosure, a 3D display screen 100 is provided, comprising a display panel 110, and the display panel 110 comprises m×n composite pixels CP, so as to define display resolution of m×n; the display screen 100 further comprises a plurality of gratings 120 covered on the m×n composite pixels CP; the m×n composite pixels CP comprise a plurality of rows of composite subpixels CSP, and each composite subpixel is composed of i subpixels P of the same color, corresponding to i viewpoints, wherein i≥3; a grating edge 121 of each grating 120 intersects with each row of composite subpixels CSP in each composite pixel CP; in each composite pixel CP, the subpixels P, close to the grating edge 121, form beginning viewpoint pixels BWP of the composite pixel or ending viewpoint pixels EWP in the adjacent composite pixel CP; and an inclination angle θ of the grating edge 121 is configured to enable that: along an extension direction of the grating edge 121, main colors of the beginning viewpoint pixels in the composite pixel CP are alternate in sequence according to a color of each composite subpixel CSP.

Wherein the grating 120 is defined by the adjacent grating edges 121, and the main colors of the beginning viewpoint pixels BWP are defined as: colors of the subpixels, which are in the subpixels P of the beginning viewpoint pixels and have the largest overlapping area with the grating 120.

The grating edge 121 comprises a first oblique edge 1211 and a second oblique edge 1212, the first oblique edge 1211 and the second oblique edge 1212 are obliquely covered on the plurality of composite pixels CP, and projections of the first oblique edge 1211 and the second oblique edge 1212, in a plane, in which the composite pixels CP are located, intersect with each composite subpixel CSP to define the inclination angle. Namely, an extension direction of the first oblique edge 1211 and the second oblique edge 1212 is not parallel to an extension direction of each composite subpixel CSP. In each composite subpixel CSP of the plurality of composite pixels CP, subpixels P intersecting with or close to the first oblique edge 1211 of the grating 120 form first terminal subpixels, and subpixels P intersecting with or close to the second oblique edge 1212 of the grating form second terminal subpixels; and according to the above implementation manner, the first terminal subpixels may be defined as beginning viewpoint pixels BWP, and the second terminal subpixels may be defined as ending viewpoint pixels EWP The definition of the above 'intersection' does not only comprise intersection in a same plane in space; and since the grating edge 121 and the composite subpixels CSP are often not located in the same plane, the 'intersection' here refers to that, the composite subpixels CSP and the first oblique edge 1211 or the second oblique edge 1212 are not located in the same plane, the first oblique edge 1211 and the second oblique edge 1212 are projected in the plane, in which the composite subpixels CSP are located, and the projections intersect with the composite subpixels CSP in the same plane.

The first oblique edge 1211 and the second oblique edge 1212 are obliquely arranged, the angle of inclination is controlled by the inclination angle, and a reference edge of the inclination angle is subject to a lower edge of the display panel 110.

The inclination angle of the grating 120 is configured to enable that: along an extension direction of the first oblique edge 1211 of the grating, the colors of the first terminal subpixels, which are in at least a part of adjacent composite pixels CP and have the largest overlapping area with the grating 120, are different.

As shown in the figures, the composite pixels CP are arranged under the grating 120, the composite pixels CP comprise a plurality of viewpoint pixels WP corresponding to the viewpoints, and according to the viewpoints required to be lightened, the viewpoint pixels WP corresponding to the viewpoints are selected correspondingly. In the embodiment, in order to achieve that the viewpoint pixels WP display different colors, so that different images are displayed under an overall visual effect, the viewpoint pixels WP comprise a plurality of subpixels P, and each subpixel P has different display colors (such as red, green and blue) and different display brightness (controlled by controlling driving voltage or driving current by a circuit). In the embodiment, the subpixels P of the same color are arranged in a same row, each row of the subpixels P of the same color form the composite subpixel CSP, and a plurality of rows of subpixels P of the same color form the composite pixel CP. In order to realize a 3D effect, according to positions of eyes of a user, the viewpoints of images received by a left eye and a right eye are acquired, and for example, the left eye corresponds to viewpoints 2, and the right eye corresponds to viewpoints 7; and correspondingly, in the display screen, the viewpoint pixels WP, corresponding to the viewpoints 2, in the m×n composite pixels CP, respectively and correspondingly display a left eye image, and the viewpoint pixels WP, corresponding to the viewpoints 7, in the m×n composite pixels CP, respectively and correspondingly display a right eye image, so as to realize the 3D effect.

In the embodiment, in each composite subpixel CSP, the corresponding subpixel P corresponding to each viewpoint is arranged, and in a row direction, colors of the subpixels P are the same; since the viewpoints are distributed in the row direction, when the eyes of the user move, the corresponding viewpoints are in a changing process, so as to require changing to render different subpixels P; since the subpixels P of the same color are arranged in the same row, the problem of cross color, caused by duration of vision, can be avoided; and additionally, due to refraction of the gratings, a part of subpixels P displayed currently are probably viewed at adjacent viewpoint positions, while through same-color and same-row arrangement, even though a part of subpixels P displayed currently are viewed, the problem of color mixture does not appear.

In the embodiment, the grating 120 is defined by the adjacent grating edges 121; in order to improve the problem of moire patterns, the grating 120 often needs to be obliquely arranged; since the grating edge 121 of the grating 120 is obliquely arranged, and generally cuts the subpixels P, the cut subpixels P are probably viewed at the viewpoint positions corresponding to the viewpoint pixels WP on the left side of the grating edge 121, and are probably viewed at the viewpoint positions corresponding to the viewpoint pixels WP on the right side of the grating edge 121. However, since at the individual viewpoint position, only part of the cut subpixels P can be viewed, namely, in the composite pixels CP, the area of the plurality of subpixels P (beginning subpixels) corresponding to the beginning viewpoint pixels BWP is different, and the display area (or may be defined as the area viewed at a viewing viewpoint) of a certain subpixel always occupies the largest proportion in the plurality of subpixels P. By adjusting the inclination angle of the grating edge 121, the sequence of appearance of the colors of the subpixels, which have the largest area proportion and are in the beginning viewpoint pixels BWP of all the composite pixels CP, may be adjusted; of course, the sequence of appearance of the colors (the colors may be defined as main colors) of the subpixels, which have the largest area proportion, may also be adjusted by adjusting the arrangement positions and sequence of all the subpixels P; and of course, process steps for preparing the display panel need to be changed greatly for the manner of adjusting the arrangement positions and sequence of the subpixels P. Generally, the sequence of appearance of the colors of the subpixels, which have the largest area proportion and are in the beginning viewpoint pixels BWP of all the composite pixels CP, may be adjusted by adopting the manner of adjusting the inclination angle of the grating edge 121, and namely, the sequence of appearance of the colors of the subpixels, which have the largest overlapping area with the grating 120 and are in the first terminal subpixels of all the composite pixels CP, is adjusted by adopting the manner of adjusting the inclination angle of the grating edge 121. In an implementation solution, the inventor discovers that if the colors of the subpixels, which have the largest area proportion and are in the beginning viewpoint pixels BWP of the composite pixels CP, always appear continuously at a large probability, or the appearance probability of the proportion is large, a display effect of the beginning viewpoint pixels BWP is affected, and for example, when red always occupies the largest proportion continuously, or the overall red occupies the largest proportion, the situation of red vignetting appears, and of course, the same is true for other colors.

In the above embodiment, along an extension direction of the first oblique edge 1211, the first terminal subpixels which are in the adjacent composite pixels CP and have the largest overlapping area with the grating 120, namely, the beginning viewpoint pixels BWP which have the largest overlapping area, are different, or appear alternately according to the color sequence, wherein the color sequence, for example may be the sequence of R (red)-G (green)-B (blue). Accordingly, in the subpixels which have the largest overlapping area and are viewed near the first oblique edge 1211, the situations of always same color and red vignetting do not appear.

In some embodiments, the adjacent gratings 120 are parallelly arranged, without space between the edges, the second oblique edge 1212 of the current grating 120 coincides with the first oblique edge 1211 of the adjacent grating 120, and similarly, the first oblique edge 1211 of the current grating 120 coincides with the second oblique edge 1212 of another adjacent grating 120; it should be noted that the above coincidence may refer to spatial coincidence of the edges when the adjacent gratings 120 are located in the same plane; and of course, if the adjacent gratings 120 are not located in the same plane, for example, are located in planes that are parallel to each other, the above coincidence refers to coincidence of the projections of the edges when a certain grating 120 is projected in the plane, in which the adjacent grating 120 is located, or coincidence of the projections of the edges and the edges of the grating located in a projection plane.

In some embodiments, the inclination angle of the grating 120 may be further configured to enable that: along an extension direction of the second oblique edge 1212 of the grating 120, the colors of the second terminal subpixels, which are in at least a part of adjacent composite pixels CP and have the largest overlapping area with the grating 120, are different.

In the embodiment, the display panel 110 may be prepared by adopting a technology of preparing a Liquid Crystal Display (LCD), and may also be prepared by adopting a technology of preparing a Micro Led, and generally, in order to simplify a preparation technique, the positions of the subpixels P are often arranged regularly and repeatedly, thereby effectively improving preparation efficiency and simplifying a preparation process. In the embodiment, the subpixels P in each composite subpixel CSP of the composite pixels CP may also be arranged regularly and repeatedly, namely, may be configured as that a pitch between the subpixels P remains unchanged, and for example, a pitch between the subpixels P in the same row remains consistent, and a row pitch of the subpixels P in a column direction remains consistent; the positions of the subpixels P between the adjacent rows may be aligned with each other, and may also be staggered with each other for other considerations. In the embodiment, the positions of the subpixels P between the adjacent rows may be aligned with each other, so that the preparation technique may be effectively simplified, and meanwhile, a stable condition is provided for setting the inclination angle of the grating edge 121.

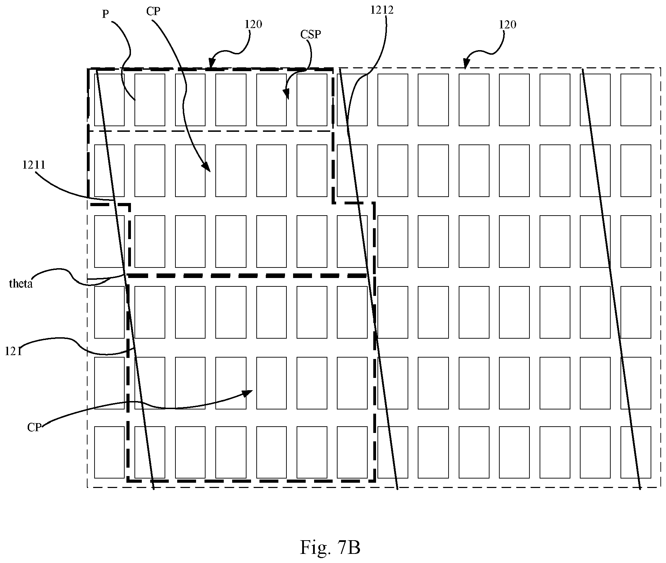

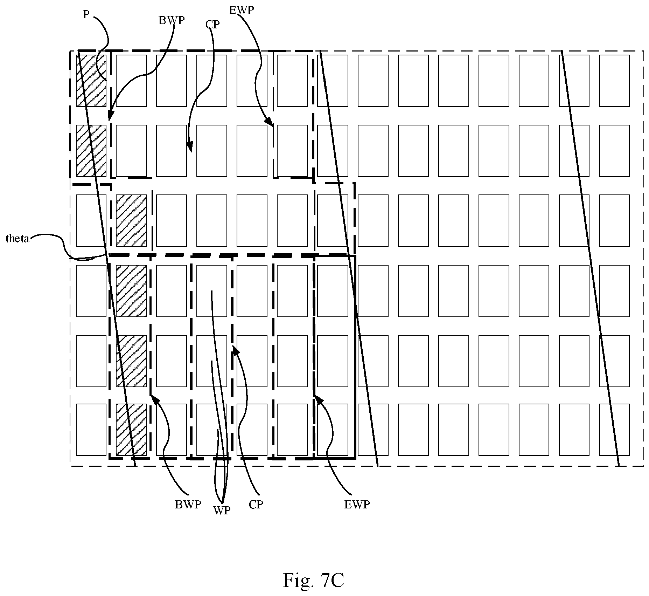

In the embodiment, along the grating edge 121, the main colors of the beginning viewpoint pixels BWP (composed of subpixels P filled with oblique grains in Fig. 7) of each composite pixel CP are alternate in sequence, so that main color components of the grating edge 121 are alternate in sequence; since relationship theories of the corresponding viewpoints of the viewpoint pixels near the grating edge 121 are approximately the same (an individual composite pixel CP probably has an installation error, and may be calibrated at a later period.), when the viewpoint pixels near the grating edge 121 need to be lightened for displaying a whole image, red vignetting (or vignetting of other colors), caused by the same proportion of the color display area in each composite pixel CP of the grating edge, is avoided; however, the area proportion of the subpixels P of different colors is enabled to be largest in turn, and for example, along a column direction (along an extension direction of the grating edge 121) of the composite pixels CP, which intersect with the first grating edge 121 in the corresponding row direction, the main colors of the beginning viewpoint pixels BWP are changed in sequence; and for example, the area proportion of the blue of the BWP in first composite pixels CP is the largest, the area proportion of the red of the BWP in second composite pixels CP is the largest, the area proportion of the green of the BWP in third composite pixels CP is the largest, the area proportion of the blue of the BWP of fourth composite pixels CP is the largest, and the main colors are changed alternately, so as to avoid the problems of red vignetting (the vignetting of other colors) or same-color bright lines.

In order to be convenient for production of a Color Filter on the display panel, the subpixels P are often arranged in an array manner; in 2D display, a plurality of subpixels P in the same column or the same row form one pixel point; while in 3D display, due to existence of the gratings, in order to avoid the moire patterns, the gratings often need to be obliquely arranged, and the plurality of subpixels in the corresponding viewpoint pixels can hardly be arranged in a same row manner or a same column manner, so that an arrangement relationship of the subpixels in the viewpoint pixels needs to be redefined; and by defining the subpixels P corresponding to the beginning viewpoint pixels BWP of the composite pixels CP, a relationship between the viewpoint pixels BWP in the whole CP and the subpixels P of the same color in the composite subpixels CSP can be defined. The definition of the beginning viewpoint pixels is:

If the grating edge 121 does not intersect with the subpixels P, along an inclination direction of the grating edge 121, first subpixels P belong to the beginning viewpoint pixels BWP;

If the grating edge 121 intersects with the subpixels P, in the intersecting subpixels P, when the remaining area is greater than or equal to a threshold along the inclination direction of the grating edge 121, the intersecting subpixels P belong to the beginning viewpoint pixels BWP, otherwise, next subpixels P of the intersecting subpixels P along the inclination direction of the grating edge 121 belong to the beginning viewpoint pixels BWP. With reference to Fig. 7C, the grating edge 121 inclines rightwards, and the grating edge 121 intersects with three composite subpixels CSP, wherein since a black matrix with a certain width exists between the subpixels P, when the grating edge 121 intersects with the composite subpixels CSP, the grating edge 121 does not intersect with the subpixels P probably; when the grating edge 121 does not intersect with the composite subpixels CSP, first subpixels on the right side of the grating edge 121 are divided into the beginning viewpoint pixels BWP in the composite pixels CP; when the grating edge 121 intersects with the subpixels P, and in the subpixels P, the area on the right side of the grating edge 121 occupies a half of the area of the subpixels P or is over other thresholds, the intersecting subpixels belong to the beginning viewpoint pixels BWP in the composite pixels CP; when the grating edge 121 intersects with the subpixels P, and in the subpixels P, the area on the right side of the grating edge 121 is less than the half of the area of the subpixels P or is equal to other thresholds, the intersecting subpixels do not belong to the beginning viewpoint pixels BWP in the composite pixels CP, second subpixels P on the right belong to the beginning viewpoint pixels BWP in the composite pixels CP, while the intersecting subpixels belong to the ending viewpoint pixels EWP in the adjacent composite pixels CP. The above proportion thresholds may be further set as 2/3 or other values.

The definition of the ending viewpoint (subpixel) pixels EWP is:
in the viewpoint subpixels P near the grating edge 121, the viewpoint subpixels P, which do not belong to the beginning viewpoint (subpixel) pixels BWP, belong to the ending viewpoint (subpixel) pixels EWP.

In some solutions of the embodiment, a size of each composite pixel CP, in a length direction and a width direction, is approximately the same. Therefore, the moire patterns can be effectively reduced, and the preparation technique is simple.

In some embodiments, each composite pixel CP comprises a plurality of composite subpixels, and each composite subpixel is composed of i subpixels of the same color, corresponding to i viewpoints, wherein i≥3. In the embodiment shown in Fig. 1A, i=6, but it may be contemplated that i may be other numerical values. In the shown embodiment, the multi-viewpoint 3D display screen may correspondingly have i (i=6) viewpoints (VI-V6), but it may be contemplated that the multi-viewpoint 3D display screen may correspondingly have more or less viewpoints.

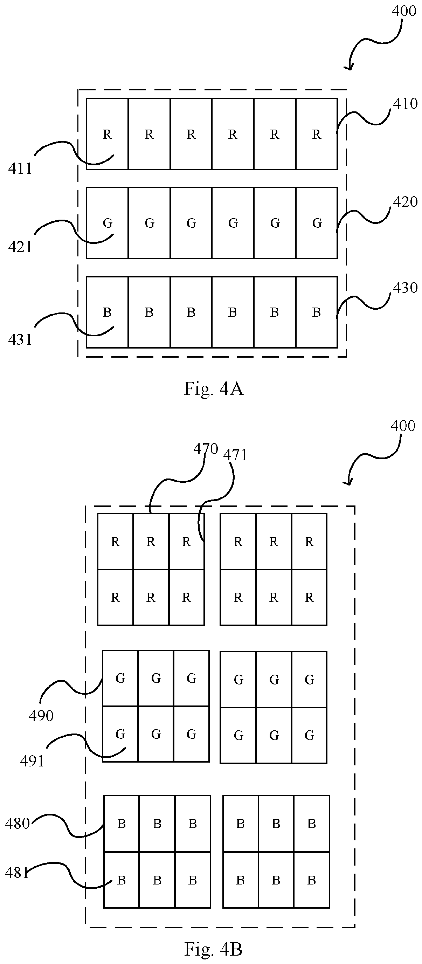

With reference to Fig. 1A and Fig. 4A, in the shown embodiments, each composite pixel comprises three composite subpixels, and each composite subpixel is composed of 6 subpixels of the same color, corresponding to 6 (i=6) viewpoints. The three composite subpixels respectively correspond to three colors: red (R), green (G) and blue (B). In other words, the three composite subpixels of each composite pixel respectively have 6 red subpixels, 6 green subpixels or 6 blue subpixels.

In the embodiments shown in Fig. 1A and Fig. 4A, composite subpixels 410, 420 and 430 in a composite pixel 400 are parallelly arranged. The composite subpixels 410, 420 and 430 respectively comprise subpixels 411, 421 and 431 in a form of a single row. However, it may be thought of different arrangement manners of the composite subpixels in the composite pixels or different arrangement manners of the subpixels in the composite subpixels.

In an embodiment shown in Fig. 4B, composite subpixels 470, 480 and 490 in the composite pixel 400 are arranged in an array manner. For example, each of the composite subpixels 470, 480 and 490 comprises subpixels 471, 481 and 491 in a 2×3 array manner.

As shown in Fig. 1A, in some solutions of the embodiment, the number of viewpoints is 6; in each composite pixel CP, three rows of composite subpixels CSP are arranged; and each viewpoint pixel is composed of three subpixels P respectively from the three rows of composite subpixels CSP.

In some solutions of the embodiment, the inclination angle θ of the grating edge 121 meets the following formula: $\tan(\theta)=\pm 3/(i\times k)$, wherein k is not divided evenly by 3, and i represents a number of viewpoints. θ is positive in anticlockwise deflection, and is negative in clockwise deflection.

In the display screen of the embodiment, according to viewpoint information related to positions, in which the eyes are located, acquired by an eye positioning device, the lightened viewpoint pixels WP can be adjusted; and since in each composite pixel, the relationship between the viewpoint pixels WP and the viewpoints is prefixed, rendering may be performed through simple displacement in each composite pixel, while which subpixel needs to be lightened does not need to be calculated according to the positions of the eyes, so as to increase a calculating amount. In some existing solutions, a calculating process further relates to a rounding process, while the solution in the embodiment avoids the problem, only needs displacement, and does not need a calculating and rounding process, so as to improve rendering efficiency.

In some solutions of the embodiment, the inclination angle θ of the grating edge meets:

$$\tan(\theta)=\pm 1\backslash 8.$$

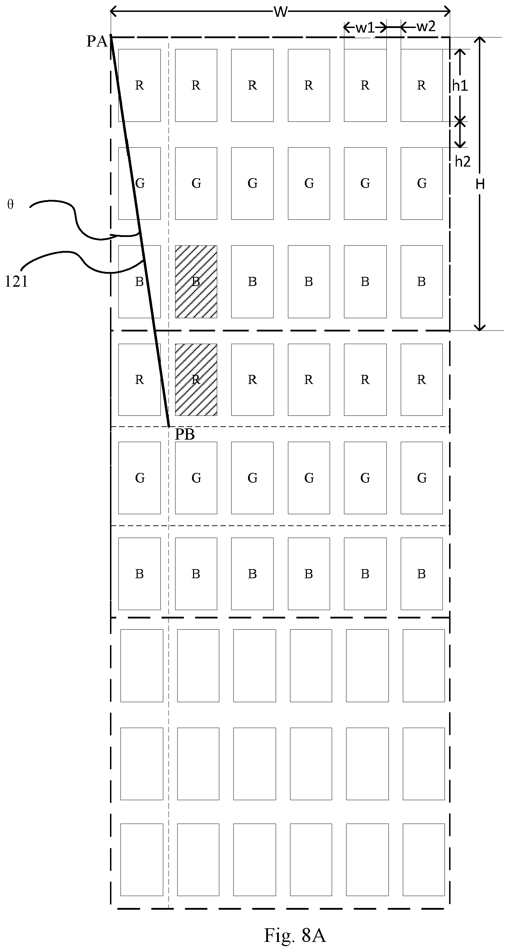

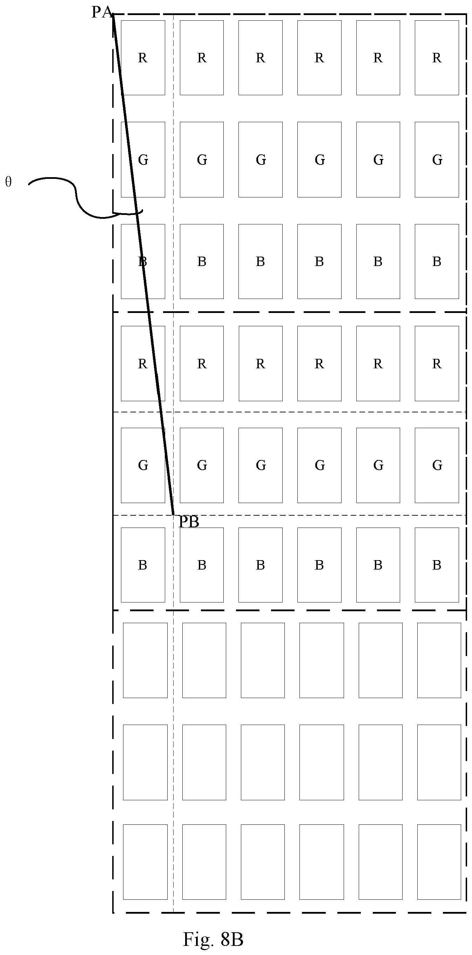

With reference to Fig. 8A and Fig. 8B, the inclination angle θ of the grating edge 121 is further described. The subpixels P in the composite pixels CP are arranged in an array manner, a pitch of the adjacent subpixels P in the same row is the same, and a pitch of the adjacent subpixels P in the same column is also the same. An intermediate point among four adjacent subpixels P is an angular point, and in order to describe the problem intuitively, near a zone of a certain composite pixel CP, a beginning point of the grating edge 121 is set to be located at an upper leftmost angular point of the composite pixel CP; since a conventional pixel point comprises three colors, the composite pixel CP in the embodiment is further set to have three rows of composite subpixels CSP of the same color; when the grating edge 121 intersects with the subpixels P in the next row, and just passes through the angular point, the grating edge 121 can be ensured to pass through the angular point regularly; the adjacent angular points, through which the grating edge 121 passes, are set as PA and PB, and an intersecting situation between PA and PB will appear regularly between the next adjacent angular points; if PB is just located in a beginning row of the next composite pixels CP, a situation that the grating edge 121 passes through the composite pixels CP appears repeatedly in each composite pixel CP; for example, after the grating edge 121 cuts the subpixels P, the remaining subpixels which are on the right side and have the largest area always appear repeatedly; and for example, the proportion of red subpixels is always the largest after the red subpixels are cut, so that when the definition of the above viewpoint pixels WP continues to be used, in the beginning viewpoint pixels BWP, the area proportion of the subpixels of the same color is always the largest, and the situation of red vignetting (the vignetting of other colors) appears. Similarly, if PB is just located in the beginning row of the next T composite pixels CP (T is more than 1.), the above problem appears at intervals; and if the proportion of a certain color in the beginning viewpoint pixels BWP is always greater than the proportion of other colors, the above display problems are also caused.

Therefore, a cutting law between the adjacent angular points set in the embodiment is not repeated among the three composite subpixels CSP, and is also not repeated among the composite subpixels CSP, the number of which is a multiple of 3.

In order to express the above setting more intuitively, with reference to Fig. 8A and Fig. 8B, formula derivation is performed as follows:

> a size of a width of the composite pixel having i viewpoint pixels WP is: $W=i\times(w1+w2)$, w1 represents a size of a width of the subpixel P, and w2 represents a pitch of the subpixels P in the row direction;
>
> a size of a height is: $H=3\times(h1+h2)$, h1 represents a size of a height of the subpixel P, and h2 represents a pitch of the subpixels in the column direction;
>
> since a size of a width and a size of a height of the composite pixel having the i viewpoint pixels WP are the same, $W=i\times(w1+w2)=H=3\times(h1+h2)$;
>
> between the adjacent angular points PA and PB, k rows of composite subpixels CSP are arranged, and k is not divided evenly by 3; the inclination angle θ of the grating edge meets: $\tan(\theta)=(w1+w2)/k\times(h1+h2)$; and according to the above relationship that the size of the width and the size of the height are the same, the above formula may be simplified as: $\tan(\theta)=(3\times(h1+h2)/i)/k\times(h1+h2)=3/(i\times k)$;
>
> in conclusion, the inclination angle θ of the grating edge 121 meets: $\tan(\theta)=3/(i\times k)$, i represents a number of viewpoints, and k represents an integer that is not divided evenly by 3; as shown in Fig. 8A, if k=4, and i=6, $\tan(\theta)=3/24=1/8$; in the first composite pixels CP, the area proportion of blue subpixels is the largest after the blue subpixels are cut; in the second composite pixels CP, the area proportion of red subpixels is the largest after the red subpixels are cut; and the process is circulated in sequence.

As shown in Fig. 8B, if k=5, and i=6, $\tan(\theta)=1/10$.

In some solutions of the embodiment, the multi-viewpoint 3D display screen is a Micro-LED display screen.

In some solutions of the embodiment, corresponding relationships between the beginning viewpoint pixels, in the composite pixels intersecting with the same grating edge 121, and the viewpoints are the same; and/or corresponding relationships between the ending viewpoint pixels, in the composite pixels intersecting with the same grating edge 121, and the viewpoints are the same. For example, the viewpoints corresponding to the beginning viewpoint pixels BWP in the composite pixels CP intersecting with the same grating edge 121 are viewpoints 1, and the viewpoints corresponding to the ending viewpoint pixels EWP in the composite pixels CP intersecting with the same grating edge 121 are viewpoints 6; and of course, in actual use, due to the actual size relationship, viewpoint relationships need to be calibrated, the beginning viewpoint pixels BWP in the individual composite pixels CP intersecting with the same grating edge 121 correspond to the viewpoints 6, and the ending viewpoint pixels EWP of the adjacent composite pixels CP correspond to viewpoints 5. In the present disclosure, information, in which the relationships between the viewpoint pixels and the viewpoints are stored, may be set for the display screen 100, so that in an image rendering process of a 3D rendering processor, the corresponding relationships are acquired in real time, so as to render the subpixels P.

In other embodiments of the present disclosure, a multi-viewpoint 3D display terminal 1000 is further provided, comprising the above 3D display screen 100, so that the 3D effect is displayed by the multi-viewpoint 3D display terminal. The above multi-viewpoint 3D display terminal 1000 may be constructed as a multi-viewpoint 3D display terminal or a multi-viewpoint 3D display device.

In some embodiments, the multi-viewpoint 3D display terminal 1000 further comprises at least one 3D processing device 130, and the 3D processing device 130 is configured to generate a plurality of images corresponding to all the viewpoints or predetermined viewpoints based on images of 3D video signals and render corresponding viewpoint subpixels in each composite pixel according to the plurality of images that are generated.

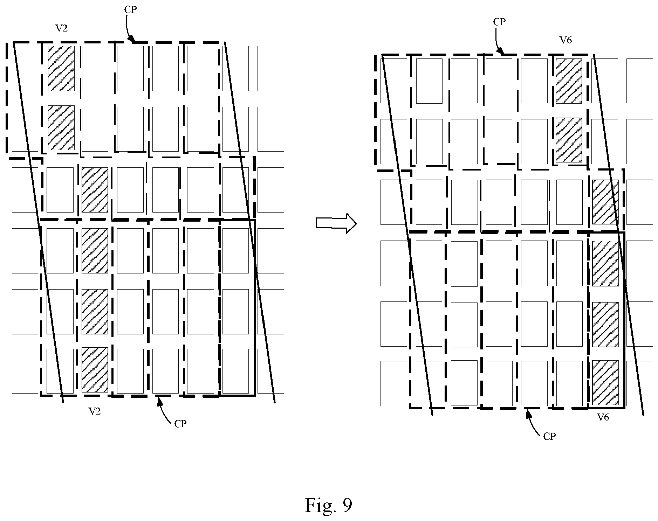

In some embodiments, the 3D processing device 130 is further configured to perform displacement rendering for viewpoint subpixels in the composite pixels according to a viewpoint position corresponding to a viewpoint subpixel rendered currently, and a next viewpoint position corresponding to a viewpoint subpixel rendered in a next frame. With reference to Fig. 9, the viewpoint rendered currently is V2, the viewpoint rendered in the next frame is V6, and through displacement, four signals are displaced for data signals, so that an image displayed by V2 can be displayed at a position corresponding to the viewpoint V6.

In some embodiments, the at least one 3D processing device 130 is configured to render at least one subpixel in each composite subpixel based on one of two images and render at least another subpixel in each composite subpixel based on the other one of the two images.

In some other embodiments, the at least one 3D processing device 130 is configured to render at least two subpixels in each composite subpixel based on a composite image.

Fig. 1A shows a structural schematic diagram of the multi-viewpoint 3D display terminal 1000 provided by an embodiment of the present disclosure. With reference to Fig. 1A, the multi-viewpoint 3D display terminal 1000 is provided in the embodiment of the present disclosure, and may comprise the multi-viewpoint 3D display screen 100, the at least one 3D processing device 130 and a video signal interface 140 used for receiving video frames of the 3D video signals.

As shown in Fig. 1A, the multi-viewpoint 3D display screen 100 comprises m columns and n rows of composite pixels, so as to define the display resolution of m×n.

In some embodiments, for example, as shown in Figs. 1A-1C, the multi-viewpoint 3D display terminal 1000 may be provided with a single 3D processing device 130. The single 3D processing device 130 is configured to simultaneously process the rendering for each composite subpixel of each composite pixel of the 3D display screen 100.

In some other embodiments, for example, as shown in Fig. 6, the multi-viewpoint 3D display terminal 1000 may be provided with at least two 3D processing devices 130. The at least two 3D processing devices 130 are configured to process the rendering for each composite subpixel of each composite pixel of the 3D display screen 100 in a parallel/serial manner or a parallel-serial combination manner.

Those skilled in the art will understand that the above at least two 3D processing devices 130 may be distributed in other manners and are configured to parallelly process the multi-row and multi-column composite pixels or composite subpixels of the 3D display screen 100, which falls into the scope of the present invention.

In some embodiments, the at least one 3D processing device 130 may further selectively comprise a buffer 131, so as to buffer the received video frames.

In some embodiments, the at least one 3D processing device 130 is an FPGA chip or an ASIC chip or an FPGA chipset or an ASIC chipset.

Continuing to refer to Fig. 1A, the multi-viewpoint 3D display terminal 1000 may further comprise a processor 101 which is in communication connection to the at least one 3D processing device 130 through the video signal interface 140. In some embodiments shown in the text, the processor 101 is comprised in a computer or an intelligent terminal, such as a mobile terminal, or serves as a processor unit. However, it may be contemplated that in some embodiments, the processor 101 may be arranged at the outer part of the multi-viewpoint 3D display terminal, and for example, the multi-viewpoint 3D display terminal may be a non-intelligent 3D television externally connected with the 3D processing device.

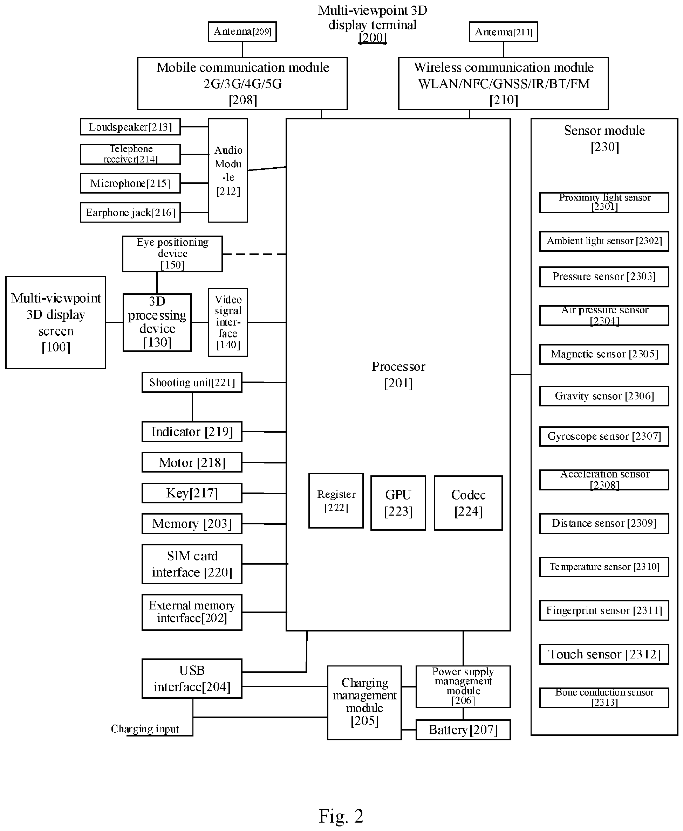

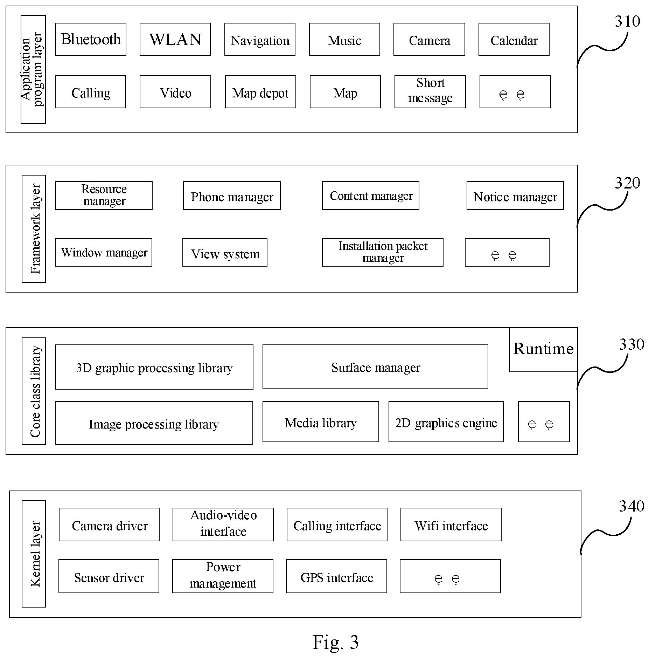

For simplicity, exemplary embodiments of the multi-viewpoint 3D display terminal 1000 hereinafter internally comprise the processor. Then, the video signal interface 140 is constructed as an internal interface for connecting the processor 101 and the 3D processing device 130, and the structure may be understood more clearly with reference to a multi-viewpoint 3D display terminal 200 implemented in a mobile terminal manner, which is shown in Fig. 2 and Fig. 3. In some embodiments of the present invention, the video signal interface 140 serving as the internal interface of the multi-viewpoint 3D display terminal 200 may be an MIPI, a mini-MIPI, an LVDS interface, a min-LVDS interface or a Display Port interface. In some embodiments, as shown in Fig. 1A, the processor 101 of the multi-viewpoint 3D display terminal 1000 may further comprise a register 102. The register 102 may be used for temporarily storing instructions, data and addresses.

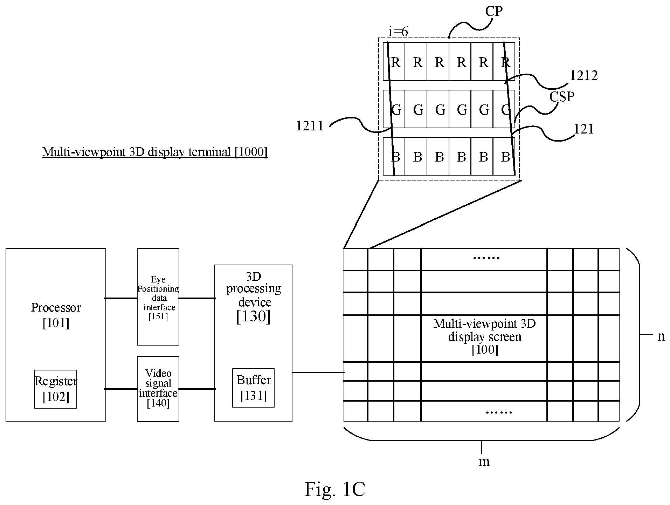

In some embodiments, the multi-viewpoint 3D display terminal 1000 may further comprise an eye positioning device or an eye positioning data interface used for acquiring real-time eye positioning data, so that the 3D processing device 130 may be configured to render corresponding subpixels in the composite pixels (composite subpixels) based on the eye positioning data. For example, in an embodiment shown in Fig. 1B, the multi-viewpoint 3D display terminal 1000 further comprises an eye positioning device 150 which is in communication connection to the 3D processing device 130, so that the 3D processing device 130 may be configured to directly receive the eye positioning data. In an embodiment shown in Fig. 1C, for example, the eye positioning device (not shown) may be directly connected with the processor 101, while the 3D processing device 130 is configured to acquire the eye positioning data from the processor 101 through an eye positioning data interface 151. In some other embodiments, the eye positioning device may be simultaneously connected with the processor and the 3D processing device, so that on the one hand, the 3D processing device 130 may be configured to directly acquire the eye positioning data from the eye positioning device, and on the other hand, other information acquired by the eye positioning device may be processed by the processor.

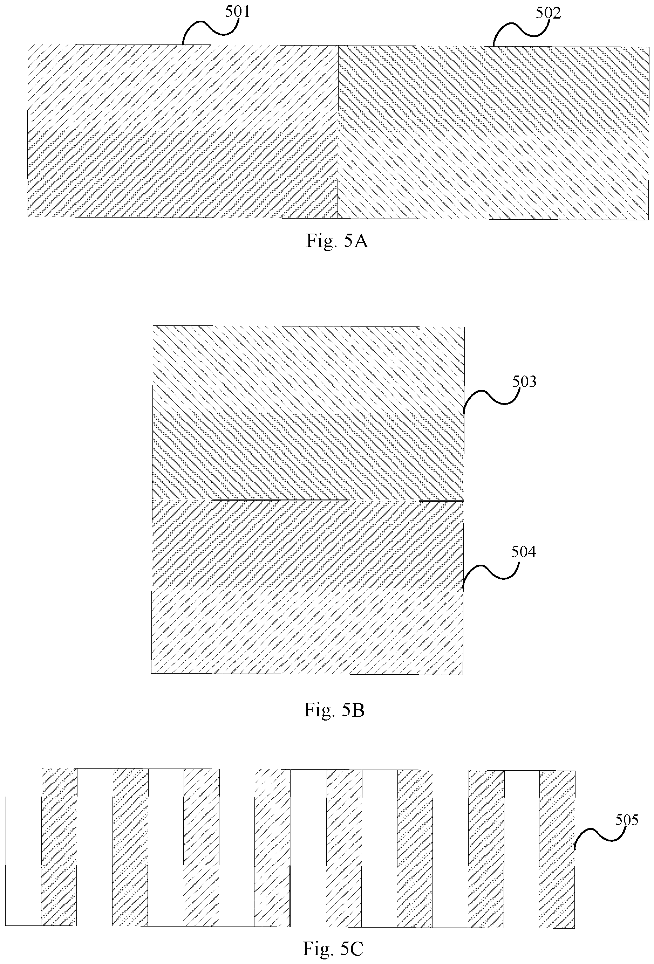

With reference to Figs. 1A-C and Figs. 5A-E, the transmission and display of the 3D video signals in the multi-viewpoint 3D display terminal in some embodiments of the present disclosure are described. In the shown embodiments, the display screen 100 may define 6 viewpoints VI-V6, and the eyes of the user may view display of the corresponding subpixel in the composite subpixels of each composite pixel in the display panel of the multi-viewpoint 3D display screen 100 at each viewpoint (a spatial position). Two different images viewed by the eyes of the user at different viewpoints form a parallax, and a 3D image is composited in a brain.

In some embodiments of the present disclosure, the 3D processing device 130 is configured to receive, for example, video frames of decompressed 3D video signals from the processor 101 through for example the video signal interface 140 serving as the internal interface. Each video frame may include two images with the resolution ofmxn or include a composite image with the resolution of 2m×n or m×2n, or is composed thereof.

In some embodiments, the two images or the composite image may comprise different types of images and may be in each type of arrangement form.

As shown in Fig. 5A, each video frame of the 3D video signals includes two images 501 and 502 with the resolution of m×n, which are in a parallel format, or is composed of the two images 501 and 502. In some embodiments, the two images may be respectively a left eye parallax image and a right eye parallax image. In some embodiments, the two images may be respectively a rendered color image and a depth-of-field (DOF) image.

As shown in Fig. 5B, each video frame of the 3D video signals includes two images 503 and 504 with the resolution of m×n, which are in an up-down format, or is composed of the two images 503 and 504. In some embodiments, the two images may be respectively a left eye parallax image and a right eye parallax image. In some embodiments, the two images may be respectively a rendered color image and a DOF image.

As shown in Fig. 5C, each video frame of the 3D video signals includes a composite image 505 with the resolution of 2m×n, which is in a left-right interlaced format. In some embodiments, the composite image may be a left eye and right eye parallax composite image in a left-right interlaced format and a rendered color and DOF composite image in a left-right interlaced format.

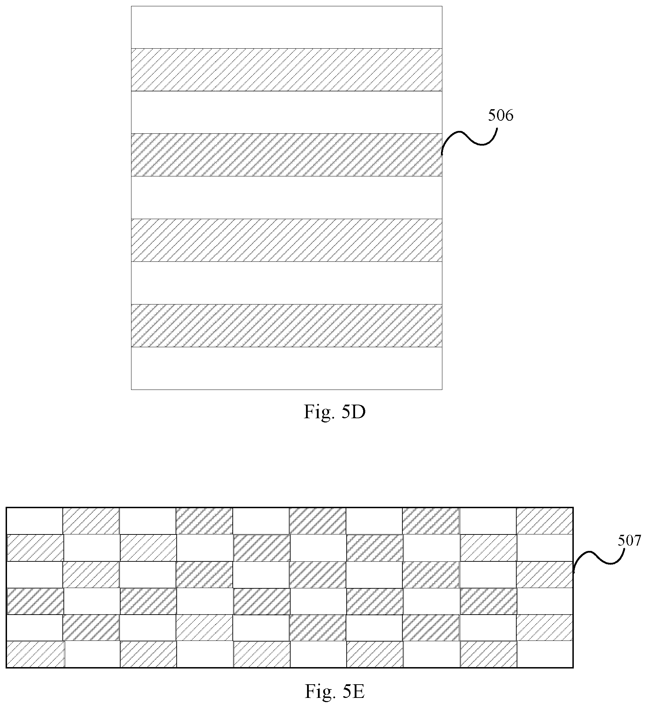

As shown in Fig. 5D, each video frame of the 3D video signals includes a composite image 506 with the resolution of m×2n, which is in an up-down interlaced format. In some embodiments, the composite image may be a left eye and right eye parallax composite image in an up-down interlaced format. In some embodiments, the composite image may be a rendered color and DOF composite image in an up-down interlaced format.

As shown in Fig. 5E, each video frame of the 3D video signals includes a composite image 507 with the resolution of 2m×n in a checkerboard format. In some embodiments, the composite image may be a left eye and right eye parallax composite image in a checkerboard format. In some embodiments, the composite image may be a rendered color image and a DOF image in a checkerboard format.

Those skilled in the art should understand that the embodiments shown in the drawings are only schematic, and the two images or the composite image included in each video frame of the 3D video signals may comprise other types of images and may be in other arrangement forms, which falls into the scope of the present invention.

In some embodiments, the resolution of m×n may be resolution over Full High Definition (FHD), comprising but not limited to 1920×1080, 1920×1200, 2048×1280, 2560×1440, 3840x2160 and the like.

In some embodiments, after the video frames of the two images are received, the at least one 3D processing device 130 is configured to render at least one subpixel in each composite subpixel based on one of the two images and render at least another subpixel in each composite subpixel based on the other one of the two images. Similarly, in some embodiments, after the video frame comprising the composite image is received, the at least one 3D processing device is configured to render at least two subpixels in each composite subpixel based the composite image. For example, at least one subpixel is rendered according to a first image (part) in the composite image, and at least another subpixel is rendered according to a second image (part).

In some embodiments, this is, for example, dynamic rendering based on the eye positioning data.

As explanation but not limit, since in the two images included in data of the video frames received by the 3D processing device 130 in the embodiments of the present disclosure through, for example, the video signal interface 140 constructed as the internal interface, the resolution of each image (or a half of the resolution of the composite image) corresponds to the composite pixels (comprising the composite subpixels divided according to the viewpoints) divided according to the viewpoints. On the one hand, since information of the viewpoints is unrelated to a transmission process, the 3D display with a small calculating amount of processing and non-damaged resolution can be realized; and on the other hand, since the composite pixels (composite subpixels) are arranged correspondingly to the viewpoints, the rendering for the display screen can be realized in a 'point-to-point' manner, thereby greatly reducing the calculating amount. By contrast, the transmission and display of images or videos of a conventional 3D display are still based on a 2D display panel, the problems of reduction of the resolution and sharp increase of a calculating amount of rendering exist, and the problems of multiple times of format adjustment and display adaptation of the images or the videos further exist probably.

In some embodiments, the register 102 of the processor 101 may be used for receiving information related to display requirements of the multi-viewpoint 3D display screen 100, and the information is typically information unrelated to the i viewpoints and related to the resolution of $m \times n$ of the multi-viewpoint 3D display screen 100, so that the processor 101 is configured to send the video frames of the 3D video signals according with the display requirements thereof to the multi-viewpoint 3D display screen 100. For example, the information may be a data packet used for initially establishing video transmission and sending.

Therefore, when the video frames of the 3D video signals are transmitted, the processor 101 does not need to consider the information related to the i viewpoints of the multi-viewpoint 3D display screen 100 ($i \geq 3$). However, the processor 101 can be configured to send the video frames of the 3D video signals according with the requirements thereof to the multi-viewpoint 3D display screen 100 by virtue of the information, related to the resolution of $m \times n$ of the multi-viewpoint 3D display screen 100, received by the register 102.

In some embodiments, the multi-viewpoint 3D display terminal 1000 may further comprise a codec, configured to decompress and code/decode compressed 3D video signals and send the decompressed 3D video signals to the at least one 3D processing device 130 through the video signal interface 140.

In some embodiments, the processor 101 of the multi-viewpoint 3D display terminal 1000 is configured to read the video frames of the 3D video signals from a memory or receive the video frames of the 3D video signals from, beyond the multi-viewpoint 3D display terminal 1000, for example through an external interface, and transmit the read or received video frames of the 3D video signals to the at least one 3D processing device 130 through the video signal interface 140.

In some embodiments, the multi-viewpoint 3D display terminal 1000 further comprises a format adjuster (not shown), for example, integrated into the processor 101, constructed as the codec or serving as a part of a Graphic Processing Unit (GPU), and used for preprocessing the video frames of the 3D video signals, so that the two images included therein have the resolution ofmxn or the composite image included therein has the resolution of $2m \times n$ or $m \times 2n$.

As described above, the multi-viewpoint 3D display terminal provided by some embodiments of the present disclosure may be a multi-viewpoint 3D display terminal including a processor. In some embodiments, the multi-viewpoint 3D display terminal may be constructed as an intelligent cell phone, a tablet personal computer, a smart television, wearable equipment, vehicle-mounted equipment, a laptop, an Ultra-Mobile Personal Computer (UMPC), a netbook, a Personal Digital Assistant (PDA) and the like.

Some embodiments of the present disclosure further provide a 3D display system, comprising the above multi-viewpoint 3D display terminal 1000, and further comprising the processor which is in communication connection with the multi-viewpoint 3D display terminal 1000; the 3D display system is constructed as the smart television provided with a processor unit; or, the 3D display system is the intelligent cell phone, the tablet personal computer, a personal computer or the wearable equipment; or, the 3D display system comprises a Set Top Box (STB) serving as the processor unit, or the cell phone/the tablet personal computer capable of realizing screen projection, and a digital television serving as the multi-viewpoint 3D display terminal, which is in wired connection or wireless connection with the STB, the cell phone or the tablet personal computer; or, the 3D display system is constructed as an intelligent home system or a part thereof, wherein the processor unit comprises an intelligent gateway or a central control unit of the intelligent home system, and the intelligent home system further comprises the eye positioning device used for acquiring eye positioning data; or, the 3D display system is constructed as an entertainment interacting system or a part thereof.

Exemplarily, Fig. 2 shows a structural schematic diagram of hardware of the multi-viewpoint 3D display terminal 200 implemented as a mobile terminal, such as the intelligent cell phone or the tablet personal computer. The multi-viewpoint 3D display terminal 200 may comprise a processor 201, an external memory interface 202, an (internal) memory 203, a Universal Serial Bus (USB) interface 204, a charging management module 205, a power supply management module 206, a battery 207, a mobile communication module 208, a wireless communication module 210, antennas 209 and 211, an audio module 212, a loudspeaker 213, a telephone receiver 214, a microphone 215, an earphone jack 216, a key 217, a motor 218, an indicator 219, a Subscriber Identity Module (SIM) card interface 220, the multi-viewpoint 3D display screen 100, the 3D processing device 130, the video signal interface 140, a shooting unit 221, the eye positioning device 150, a sensor module 230 and the like, wherein the sensor module 230 may comprise a proximity light sensor 2301, an ambient light sensor 2302, a pressure sensor 2303, an air pressure sensor 2304, a magnetic sensor 2305, a gravity sensor 2306, a gyroscope sensor 2307, an acceleration sensor 2308, a distance sensor 2309, a temperature sensor 2310, a fingerprint sensor 2311, a touch sensor 2312, a bone conduction sensor 2313 and the like.

It may be understood that the schematic structures of the embodiments of the present disclosure do not form specific limit to the multi-viewpoint 3D display terminal 200. In some other embodiments of the present disclosure, the multi-viewpoint 3D display terminal 200 may comprise components more or less than the components shown in the drawings, or certain components are combined, or certain components are split, or different components are arranged. The components shown in the drawings may be realized by the hardware, software or the combination of the software and the hardware.

The processor 201 may comprise one or more processing units, and for example, the processor 201 may comprise an Application Processor (AP), a modulation-demodulation processor, a baseband processor, a GPU 223, an Image Signal Processor (ISP), a controller, a memory, a codec 224, a Digital Signal Processor (DSP), a baseband processor, a Neural Network Processing Unit (NPU) and the like or a combination thereof, wherein different processing units may be independent devices, and may also be integrated in one or more processors.

The processor 201 may be further provided with a high-speed buffer, used for storing instructions or data just used or recycled by the processor 201. If the processor 201 needs to use the instructions or the data again, the instructions or the data may be directly called from the memory.

In some embodiments, the processor 201 may comprise one or more interfaces. The interface may comprise an integrated circuit (I2C) interface, an integrated circuit built-in audio (I2S) interface, a Pulse Code Modulation (PCM) interface, a Universal Asynchronous Receiver/Transmitter (UART) interface, a Mobile Industry Processor Interface (MIPI), a General Purpose Input/Output (GPIO) interface, a SIM interface, a USB interface and the like.

The I2C interface is a two-way synchronous serial bus, and comprises a Serial Data Line (SDA) and a Serial Clock Line (SCL). In some embodiments, the processor 201 may include a plurality of groups of I2C buses. The processor 201 may be in communication connection with the touch sensor 2312, a charger, a flash lamp, the shooting unit 221, the eye positioning device 150 and the like through different I2C bus interfaces respectively.

Both the I2S interface and the PCM interface may be used for audio communication.

The UART interface is a universal serial data bus, used for asynchronous communication. The bus may be a two-way communication bus. The bus is configured to convert to-be-transmitted data between serial communication and parallel communication. In some embodiments, the UART interface is used for connecting the processor 201 and the wireless communication module 210.

In an embodiment shown in Fig. 2, the MIPI may be used for connecting the processor 201 and the multi-viewpoint 3D display screen 100. Additionally, the MIPI may also be used for connecting peripheral devices, such as the shooting unit 221, the eye positioning device 150 and the like.

The GPIO interface may be configured by software. The GPIO interface may be configured as a control signal and may also be configured as a data signal. In some embodiments, the GPIO interface may be used for connecting the processor 201, the shooting unit 221, the multi-viewpoint 3D display screen 100, the wireless communication module 210, the audio module 212, the sensor module 230 and the like

The USB interface 204 is an interface according with the USB standard specification, and specifically, may be a Mini USB interface, a Micro USB interface, a USB Type C interface and the like. The USB interface 204 may be used for connecting the charger for charging the multi-viewpoint 3D display terminal 200, and may also be used for transmitting data between the multi-viewpoint 3D display terminal 200 and peripheral equipment. The USB interface 204 may also be used for connecting an earphone, and audios are played by the earphone.

It may be understood that schematic interface connection relationships between the modules in the embodiments of the present disclosure are only the schematic description, and do not form a limitation to the structure of the multi-viewpoint 3D display terminal 200.

A wireless communication function of the multi-viewpoint 3D display terminal 200 may be realized by the antennas 209 and 211, the mobile communication module 208, the wireless communication module 210, the modulation-demodulation processor or the baseband processor and the like.

The antennas 209 and 211 are used for emitting and receiving electromagnetic wave signals. Each antenna in the multi-viewpoint 3D display terminal 200 may be used for covering single or more communication bands. Different antennas may be further reused, so as to improve the utilization rate of the antennas.

The mobile communication module 208 may provide a solution of wireless communication comprising 2G/3G/4G/5G and the like, applied on the multi-viewpoint 3D display terminal 200. The mobile communication module 208 may comprise at least a wave filter, a switch, a power amplifier, a Low Noise Amplifier (LNA) and the like. The mobile communication module 208 may be configured to receive electromagnetic waves by the antenna 209, perform wave filtering, amplifying and the like for the received electromagnetic waves, and transmit the received electromagnetic waves to the modulation-demodulation processor for demodulation. The mobile communication module 208 may be further configured to amplify signals after being modulated by the modulation-demodulation processor, convert the amplified signals into the electromagnetic waves by the antenna 209 and radiate the electromagnetic waves out. In some embodiments, at least a part of functional modules of the mobile communication module 208 may be arranged in the processor 201. In some embodiments, at least part of functional modules of the mobile communication module 208 and at least part of modules of the processor 201 may be arranged in a same device.

The wireless communication module 210 may provide a solution of wireless communication comprising a Wireless Local Area Network (WLAN), Bluetooth (BT), a Global Navigation Satellite System (GNSS), Frequency Modulation (FM), a Near Field Communication (NFC) technology, an Infrared Radiation (IR) technology and the like, applied on the multi-viewpoint 3D display terminal 200. The wireless communication module 210 may be one or more devices integrated with at least one communication processing module. The wireless communication module 210 is configured to receive electromagnetic waves by the antenna 211, perform FM and wave filtering for electromagnetic wave signals, and send the processed signals to the processor 201. The wireless communication module 210 may be further configured to receive to-be-sent signals from the processor 201, perform FM and amplifying for the received signals, convert the processed signals into electromagnetic waves by the antenna 211 and radiate the electromagnetic waves out.

In some embodiments, the antenna 209 of the multi-viewpoint 3D display terminal 200 is coupled with the mobile communication module 208, and the antenna 211 is coupled with the wireless communication module 210, so that the multi-viewpoint 3D display terminal 200 may realize communication with a network and other equipment through a wireless communication technology. The wireless communication technology may comprise a Global System for Mobile Communications (GSM), a General Packet Radio Service (GPRS), Code Division Multiple Access (CDMA), Wideband Code Division Multiple Access (WCDMA), Time Division-Synchronization Code Division Multiple Access (TD-SCDMA), Long Term Evolution (LTE), the BT, the GNSS, the WLAN, the NFC, the FM, and/or the IR technology and the like. The GNSS may comprise a Global Positioning System (GPS), a Global Navigation Satellite System (GLONASS), a Beidou Navigation Satellite System (BDS), a Quasi-Zenith Satellite System (QZSS) and/or a Satellite Based Augmentation System (SBAS).

In some embodiments, the external interface used for receiving the 3D video signals may comprise the USB interface 204, the mobile communication module 208, the wireless communication module 210 or the combination thereof. Additionally, other feasible interfaces used for receiving the 3D video signals, such as the above interfaces, may be further contemplated.

The memory 203 may be used for storing computer executable program codes, and the executable program codes comprise instructions. The processor 201 is configured to operate the instructions stored in the memory 203, so as to execute each function applications and data processing of the multi-viewpoint 3D display terminal 200 and data processing. The memory 203 may comprise a program storage area and a data storage area, wherein the program storage area may be configured to store an operation system, an application program required by at least one function (such as an audio playing function and an image playing function) and the like. The data storage area may be configured to store data (such as audio data and phone books) and the like that are established in a using process of the multi-viewpoint 3D display terminal 200. Additionally, the memory 203 may comprise a high-speed RAM (Random Access Memory), and may further comprise a nonvolatile memory, such as at least one disk storage device, a flash memory device, a Universal Flash Storage (UFS) and the like.

The external memory interface 202 may be used for connecting an external storage card, such as a Micro SD (Secure Digital) card, so as to extend the storage capacity of the multi-viewpoint 3D display terminal 200. The external storage card is in communication with the processor 201 through the external memory interface 202, so as to realize a data storage function.

In some embodiments, the memory of the multi-viewpoint 3D display terminal may comprise the (internal) memory 203, the external storage card connected with the external memory interface 202 or a combination thereof. In some other embodiments of the present disclosure, the video signal interface may also adopt different internal interface connection manners in the above embodiments or a combination thereof.

In some embodiments of the present disclosure, the shooting unit 221 may be configured to acquire images or videos.

In some embodiments, the multi-viewpoint 3D display terminal 200 realizes a display function through the video signal interface 140, the 3D processing device 130, the multi-viewpoint 3D display screen 100, the AP and the like.

In some embodiments, the multi-viewpoint 3D display terminal 200 may comprise the GPU, and for example, used for processing 3D video images in the processor 201, and may also be used for processing 2D video images.

In some embodiments, the multi-viewpoint 3D display terminal 200 further comprises the codec 224, used for compressing or decompressing digital videos.

In some embodiments, the video signal interface 140 is used for outputting the video frames of the 3D video signals, such as the decompressed 3D video signals, processed by the GPU or the codec 224 or the GPU and the codec 224, to the 3D processing device 130.

In some embodiments, the GPU or the codec 224 is integrated with the format adjuster.

The multi-viewpoint 3D display screen 100 is used for displaying 3D images or videos and the like. The multi-viewpoint 3D display screen 100 comprises the display panel. The display panel may adopt a Liquid Crystal Display (LCD), an Organic Light Emitting Diode (OLED), an Active Matrix/Organic Light Emitting Diode (AMOLED), a Flexible Light Emitting Diode (FLED), a Mini-LED, a Micro-LED, a Micro-OLED, a Quantum Dot Light Emitting Diode (QLED) and the like.

In some embodiments, the eye positioning device 150 is in communication connection with the 3D processing unit 130, so that the 3D processing unit 130 may be configured to render the corresponding subpixels in the composite pixels (composite subpixels) based on the eye positioning data. In some embodiments, the eye positioning device 150 may be further connected with the processor 201, and for example, a bypass is connected with the processor 201.

The multi-viewpoint 3D display terminal 200 may realize an audio function, such as music playing, recording and the like, through the audio module 212, the loudspeaker 213, the telephone receiver 214, the microphone 215, the earphone jack 216, the AP and the like. The audio module 212 is used for converting digital audio information into analog audio signals and outputting the analog audio signals, and is also used for inputting analog audios and converting the input analog audios into digital audio signals. The audio module 212 may be further used for coding and decoding the audio signals. In some embodiments, the audio module 212 may be arranged in the processor 201, or part of functional modules of the audio module 212 are arranged in the processor 201. The loudspeaker 213 is used for converting electrical audio signals into sound signals. The multi-viewpoint 3D display terminal 200 may be configured to listen in to music or hands-free calls through the loudspeaker 213. The telephone receiver 214, also called 'a handset', is used for converting the electrical audio signals into the sound signals. When the multi-viewpoint 3D display terminal 200 is used for answering the calls or voice information, the telephone receiver 214 may be close to ears to answer voices. The microphone 215 is used for converting the sound signals into electrical signals. The earphone jack 216 is used for connecting a wired headset. The earphone jack 216 may be the USB interface 204, and may also be an Open Mobile Terminal Platform (OMTP) standard interface of 3.5 mm and a Cellular Telecommunications Industry Association of America (CTIA) standard interface.

The key 217 comprises a power button, a volume button and the like. The key 217 may be a mechanical key, and may also be a touch key. The multi-viewpoint 3D display terminal 200 may be configured to receive key input, to generate key signal input related to user settings and functional control of the multi-viewpoint 3D display terminal 200.

The motor 218 may generate a vibration alert. The motor 218 may be used for the vibration alert for the calls, and may also be used for a touch vibration feedback.

The SIM card interface 220 is used for connecting an SIM card. In some embodiments, the multi-viewpoint 3D display terminal 200 adopts an eSIM, i.e. an embedded SIM card.

The pressure sensor 2303 is used for feeling pressure signals, and may be used for converting the pressure signals into electrical signals. In some embodiments, the pressure sensor 2303 may be arranged in the multi-viewpoint 3D display screen 100, which falls into the scope of the present invention.

The air pressure sensor 2304 is used for measuring air pressure. In some embodiments, the multi-viewpoint 3D display terminal 200 is configured to calculate altitude through an air pressure value measured by the air pressure sensor 2304, so as to assist positioning and navigation.

The magnetic sensor 2305 comprises a Hall sensor.

The gravity sensor 2306 is a sensor for converting movement or gravity into electrical signals, and is mainly used for measuring parameters such as an inclination angle, inertia force, impact, vibration and the like.

The gyroscope sensor 2307 may be used for determining a moving posture of the multi-viewpoint 3D display terminal 200.

The acceleration sensor 2308 may be used for detecting a size of an acceleration of the multi-viewpoint 3D display terminal 200 in each direction (three axes in general).

The distance sensor 2309 may be used for measuring a distance.

The temperature sensor 2310 may be used for detecting temperature.

The fingerprint sensor 2311 is used for acquiring fingerprints. The multi-viewpoint 3D display terminal 200 may realize fingerprint unlocking, access to an application lock, fingerprint shooting, fingerprint answering of the calls and the like by utilizing the acquired fingerprints.

The touch sensor 2312 may be arranged in the multi-viewpoint 3D display screen 100, and the touch sensor 2312 and the multi-viewpoint 3D display screen 100 form a touch screen, also called 'a touch control screen'.

The bone conduction sensor 2313 may be used for acquiring vibration signals.

The charging management module 205 is used for receiving charging input from the charger, wherein the charger may be a wireless charger, and may also be a wired charger. In some embodiments of wired charging, the charging management module 205 may be configured to receive charging input of the wired charger through the USB interface 204. In some embodiments of wireless charging, the charging management module 205 may be configured to receive wireless charging input through a wireless charging coil of the multi-viewpoint 3D display terminal 200.

The power supply management module 206 is used for connecting the battery 207, the charging management module 205 and the processor 201. The power supply management module 206 is configured to receive input of the battery 207 and/or the charging management module 205, so as to supply power for the processor 201, the memory 203, an external memory, the multi-viewpoint 3D display screen 100, the shooting unit 221, the wireless communication module 210 and the like. In some other embodiments, the power supply management module 206 and the charging management module 205 may also be arranged in a same device.

A software system of the multi-viewpoint 3D display terminal 200 may adopt a layered architecture, an event-driven architecture, a micro-kernel architecture, a micro-service architecture, or a cloud architecture. The embodiments shown in the present disclosure take an Android system in the layered architecture as an example, and exemplarily illustrate a software structure of the multi-viewpoint 3D display terminal 200. However, it may be contemplated that the embodiments of the present disclosure may be implemented in different software systems, such as an operating system.

Fig. 3 is a structural schematic diagram of software of the multi-viewpoint 3D display terminal 200 according to the embodiments of the present disclosure. The software is divided into a plurality of layers by the layered architecture. The communication between the layers is realized through a software interface. In some embodiments, the Android system is divided into four layers, comprising an application program layer 310, a framework layer 320, a core class library and Runtime 330 and a kernel layer 340 from top to bottom in sequence.

The application program layer 310 may comprise a series of application program packets. As shown in Fig. 3, the application program packets may comprise application programs such as BT, WLAN, navigation, music, a camera, a calendar, calling, a video, a map depot, a map, a short message and the like. A 3D video display method according to the embodiments of the present disclosure, for example may be implemented in a video application program.

The framework layer 320 is configured to provide Application Programming Interfaces (APIs) and programming frameworks for the application programs of the application program layer. The framework layer comprises some predefined functions. For example, in some embodiments of the present disclosure, functions or algorithms for identifying the acquired 3D video images, algorithms for processing the images and the like may be comprised in the framework layer.

As shown in Fig. 3, the framework layer 320 may comprise a resource manager, a phone manager, a content manager, a notice manager, a window manager, a view system, an installation packet manager and the like.

Android Runtime comprises a core library and a virtual machine. The Android Runtime is in charge of scheduling and management of the Android system.

The core library includes two parts: one part is a functional function that a java language needs to call, and the other part is an Android core library.

The application program layer and the framework layer operate in the virtual machine. The virtual machine is configured to execute java files of the application program layer and the framework layer to binary files. The virtual machine is used for executing functions such as management for an object life cycle, stack management, thread management, management for security and abnormity, garbage collection and the like.

The core class library may comprise a plurality of functional modules, such as a 3D graphic processing library (such as an Open Graphics Library Expert System (OpenGL ES)), a surface manager, an image processing library, a media library, a graphics engine (such as a Skia Graphics Library (SGL)) and the like.

The kernel layer 340 is a layer between the hardware and the software. The kernel layer at least includes a camera driver, an audio-video interface, a calling interface, a Wifi interface, a sensor driver, power management and a GPS interface.

Here, the multi-viewpoint 3D display terminal, serving as the mobile terminal, in a structure shown in Fig. 2 and Fig. 3 is taken as an example, and an embodiment of 3D video transmission and display in the multi-viewpoint 3D display terminal is described; however, it may be contemplated that more or less features may be comprised or the features therein are changed in some other embodiments.

In some embodiments, for example, the multi-viewpoint 3D display terminal 200, such as the intelligent cell phone or the tablet personal computer, serving as the mobile terminal, is configured to receive, for example the compressed 3D video signals, from the network, such as a cellular network, a WLAN network and BT, for example by virtue of the mobile communication module 208 and the antenna 209 or the wireless communication module 210 and the antenna 221, serving as external interfaces; image processing is performed for the compressed 3D video signals, for example by the GPU 223, and the processed 3D video signals are coded/decoded and decompressed by the codec 224; then the decompressed 3D video signals are sent to the at least one 3D processing device 130, for example through the video signal interface 140, such as the MIPI or the mini-MIPI, serving as the internal interface; and each video frame of the decompressed 3D video signals comprises the two images or the composite image of the embodiments of the present disclosure. Then, the 3D processing device 130 is configured to correspondingly render the subpixels in the composite subpixels of the display screen, so as to realize 3D video playing.

In some other embodiments, the multi-viewpoint 3D display terminal 200 is configured to read the (internal) memory 203 or read the compressed 3D video signals stored in the external storage card by the external memory interface 202, and the 3D video playing is realized through corresponding processing, transmission and rendering.

In some embodiments, the above 3D video playing is implemented in the video application program in the application program layer 310 of the Android system.

The equipment, the devices, the modules or the units illustrated in the above embodiments may be realized by each type of possible entity. A typical realizing entity is the computer or the processor thereof or other components. Specifically, the computer, for example, may be the personal computer, a laptop computer, vehicle-mounted human-computer interaction equipment, the cell phone, a camera phone, an intelligent phone, the PDA, a media player, navigation equipment, E-mail equipment, a game console, the tablet personal computer, the wearable equipment, the smart television, an Internet of Things (IoT) system, smart home, an industrial computer, a singlechip system or a combination thereof. In a typical configuration, the computer may comprise one or more Central Processing Units (CPUs), an input/output interface, a network interface and a memory. The memory probably comprises a volatile memory, an RAM and/or a nonvolatile memory and other forms in a computer readable medium, such as a Read Only Memory (ROM) or a flash RAM

The method, the programs, the equipment, the devices and the like in the embodiments of the present invention may be executed or realized in one or more networked computers, and may also be implemented in distributed computing environments. In the embodiments of the description, in the distributed computing environments, tasks are executed by remote processing equipment connected by a communication network.

Those skilled in the art should understand that the embodiments of the description may provide the method, the equipment or computer program products. Therefore, the embodiments of the description may adopt forms of full-hardware embodiments, full-software embodiments or embodiments combining software and hardware aspects.

Those skilled in the art may contemplate that the functional modules/units or the controller and related method steps, illustrated in the above embodiments, may be realized in a software manner, a hardware manner and a software/hardware combination manner, and for example, may be realized in a pure computer readable program code manner; and logic programming can also be performed for part or all of the method steps to enable the controller to realize same functions by the hardware, comprising but not limited to a logic gate, a switch, a special integrated circuit, a Programmable Logic Controller (PLC) (such as the FPGA) and an embedded microcontroller.

In some embodiments of the present invention, the components of the devices are described in a form of the functional modules/units. It may be contemplated that a plurality of functional modules/units are realized in one or more 'combined' functional modules/units and/or one or more software and/or hardware. It may also be contemplated that the single functional module/unit is realized by the combination of a plurality of sub-functional modules/sub-units and/or multiple software and/or hardware. The division of the functional modules/units may be only a logic function division, and in a specific realizing manner, the plurality of functional modules/units may be combined or may be integrated into another system. Additionally, the connection of the modules, the units, the devices, the systems and the components thereof in the text comprises direct or indirect connection, covering feasible electrical, mechanical and communication connection, especially comprising wired or wireless connection between the interfaces of each type, comprising but not limited to a High-Definition Multimedia Interface (HDMI), thunders, the USB, the WiFi and the cellular network.

In the embodiments of the present invention, the technical features, the flow charts and/or the block diagrams of the method and the programs may be applied in the corresponding devices, equipment and systems as well as the modules, the units and the components thereof. On the contrary, each embodiment and features of the devices, the equipment, the systems as well as the modules, the units and the components thereof may be applied in the method and the programs according to the embodiments of the present invention. For example, a computer program instruction may be loaded in a general-purpose computer, a special computer, an embedded processor or a processor of other programmable data processing equipment to generate a machine which has corresponding functions or features realized in one program or more programs of the flow charts and/or one block or more blocks of the block diagrams.

The method and the programs according to the embodiments of the present invention may be stored in a computer readable memory or medium which can guide the computer or other programmable data processing equipment to work in a specific manner by way of the computer program instructions or programs. The embodiments of the present invention also relate to the readable memory or medium which stores the method, the programs and the instructions which can implement the embodiments of the present invention.

A storage medium comprises permanent and impermanent articles and mobile and immobile articles that may be used for realizing information storage by any method or technology. The information may be modules of a computer readable instruction, a data structure and a program or other data. Examples of the storage medium comprise, but not limited to a Phase-Change Random Access Memory (PRAM), a Static Random Access Memory (SRAM), a Dynamic Random Access Memory (DRAM), other types of RAMs, ROMs, Electrically Erasable Programmable Read-Only Memories (EEPROMs), flash memories or other memory technologies, Compact Disc Read-Only Memories (CD-ROMs) and Digital Video Disks (DVDs) or other optical memories and magnetic cassette tapes, and tape disk storage equipment or other magnetic storage equipment or any other non-transmission medium may be used for storing information which may be accessed by calculating equipment.

Unless clearly pointed out, actions or steps of the method and the programs recorded according to the embodiments of the present invention are not necessarily executed according to a specific sequence, and an expected result may still be realized. In some implementation manners, multitasking and parallel processing are also permissible or are probably favorable.

In the text, multiple embodiments of the present invention are described, but for simplicity, the description for each embodiment is not elaborate, and same and similar features or parts between the embodiments are probably neglected. In the text, 'an embodiment', 'some embodiments', 'examples', 'specific examples' or 'some examples' refer to being suitable for at least one embodiment or example according to the present invention, rather than all the embodiments. The above terms are not necessarily meant to refer to the same embodiment or example. In addition, the specific features, structures, materials or characteristics of each embodiment may be combined in a proper manner in any one or more embodiments or examples. Additionally, under the condition of no mutual contradiction, those skilled in the art may combine different embodiments or examples and the features of the different embodiments or examples, which are described in the description.

In the text, the term 'comprise', 'include' or a variant thereof refers to a covering form, rather than an exhaustive form, so that the process, the method, the products or the equipment, comprising a series of elements, may comprise the elements, and non-exclusively, may further comprise other elements that are not listed clearly. For the purpose of the disclosure and unless specifically described, 'one' refers to 'one or more'. The term 'comprise' or 'comprised' used in the description and the claims is non-exclusive, which is similar to 'include' to a certain degree, because the terms, when serving as transitional conjunctions, are explanatory. Additionally, the used term 'or' (such as A or B) refers to 'A or B or A and B'. When an applicant intends to indicate 'only A or B, rather than A and B', 'only A or B, rather than A and B' will be used. Therefore, the use of the term 'or' is included, rather than non-exclusive.

The exemplary system and method of the present invention are specifically shown and described with reference to the above embodiments, and are only optimal modes of examples for implementing the system and the method. Those skilled in the art may understand that when the system and/or the method is implemented, each change may be made to the embodiments of the system and the method described here, without departing from the spirit and the scope, defined in the attached claims, of the present invention. The attached claims are intended to define the scope of the system and the method, and therefore, the system and the method, falling in the claims and being equivalent thereto, may be covered. The above illustration for the system and the method should be understood to comprise all combinations of new and non-obvious elements described here, while the claims relating to any combination of the new and non-obvious elements may exist in the present application or the follow-up application. Additionally, the above embodiments are exemplary, and in all possible combinations that may be claimed in the present application or the follow-up application, no single feature or element is essential.

## Claims

**1.** A multi-viewpoint 3D display screen, comprising:

a display panel, comprising a plurality of composite pixels, wherein each composite pixel of the plurality of composite pixels comprises a plurality of composite subpixels, and each composite subpixel of the plurality of composite subpixels comprises a plurality of subpixels corresponding to a plurality of viewpoints of the multi-viewpoint 3D display screen; and

a plurality of gratings, parallelly arranged on the plurality of composite pixels, wherein each grating of the plurality of gratings comprises a first oblique edge and a second oblique edge, and each grating is obliquely covered on the plurality of composite pixels so that the first oblique edge and the second oblique edge intersect with each composite subpixel to define an inclination angle;

wherein in each composite subpixel, subpixels intersecting with or close to the first oblique edge form first terminal subpixels, and subpixels intersecting with or close to the second oblique edge form second terminal subpixels;

the inclination angle is configured to enable that: along an extension direction of the first oblique edge of each grating, colors of the first terminal subpixels, which are in at least a part of adjacent composite pixels and have the largest overlapping area with each grating, are different.

**2.** The multi-viewpoint 3D display screen according to claim 1, wherein the inclination angle is configured to enable that: along an extension direction of the second oblique edge of each grating, colors of the second terminal subpixels, which are in at least a part of adjacent composite pixels and have the largest overlapping area with each grating, are different.

**3.** The multi-viewpoint 3D display screen according to claim 1, wherein the first terminal subpixels form subpixels corresponding to beginning viewpoints, wherein

in each composite subpixel, when a covered area of subpixels intersecting with the first oblique edge is greater than or equal to an area threshold, the subpixels intersecting with the first oblique edge form the subpixels corresponding to the beginning viewpoints; or

in each composite subpixel, when a covered area of subpixels intersecting with the first oblique edge is less than an area threshold, a next subpixel adjacent to subpixels intersecting with the first oblique edge forms a subpixel corresponding to the beginning viewpoints.

**4.** The multi-viewpoint 3D display screen according to claim 1, wherein the second terminal subpixels form subpixels corresponding to ending viewpoints, wherein

in each composite subpixel, when a covered area of subpixels intersecting with the second oblique edge is greater than or equal to an area threshold, the subpixels intersecting with the second oblique edge form the subpixels corresponding to the ending viewpoints; or

in each composite subpixel, when a covered area of subpixels intersecting with the second oblique edge is less than an area threshold, a previous subpixel adjacent to subpixels intersecting with the second oblique edge forms a subpixel corresponding to the ending viewpoints.

**5.** The multi-viewpoint 3D display screen according to any one of claims 1-4, wherein sizes of each composite pixel in a length direction and a width direction are the same.

**6.** The multi-viewpoint 3D display screen according to any one of claims 1-4, wherein the plurality of gratings comprise a plurality of cylindrical prism gratings.

**7.** The multi-viewpoint 3D display screen according to any one of claims 1-4, wherein each composite subpixel comprises a plurality of subpixels in a form of a single row or array.

**8.** The multi-viewpoint 3D display screen according to any one of claims 1-4, wherein the plurality of composite subpixels comprise at least one of red composite subpixels, green composite subpixels and blue composite subpixels.

**9.** The multi-viewpoint 3D display screen according to any one of claims 1-4, wherein the inclination angle $\theta$ meets:

$\tan(\theta)=\pm 3/(i\times k)$, wherein k is not divided evenly by 3, and i represents a number of viewpoints; or

$$\tan(\theta)=\pm 1\backslash 8.$$

**10.** A multi-viewpoint 3D display terminal, comprising the multi-viewpoint 3D display screen of any one of claims 1-9.

**11.** The multi-viewpoint 3D display terminal according to claim 10, further comprising a 3D processing device, configured to render corresponding subpixels in the plurality of composite subpixels in the multi-viewpoint 3D display screen based on 3D signals.

**12.** The multi-viewpoint 3D display terminal according to claim 11, wherein the 3D processing device is further configured to perform displacement rendering for corresponding subpixels in the plurality of composite subpixels according to viewpoints corresponding to subpixels rendered currently and viewpoints corresponding to subpixels rendered subsequently.

**13.** The multi-viewpoint 3D display terminal according to claim 11, further comprising a memory, configured to store corresponding relationships of subpixels and viewpoints;

wherein the 3D processing device is configured to acquire the corresponding relationships.

**14.** The multi-viewpoint 3D display terminal according to claim 11, wherein the 3D processing device is a Field Programmable Gate Array (FPGA) chip or an Application Specific Integrated Circuit (ASIC) chip or an FPGA chipset or an ASIC chipset.

**15.** The multi-viewpoint 3D display terminal according to any one of claims 10-14, further comprising an eye positioning data acquisition device, configured to acquire eye positioning data of a user.

CP
i=6
R R R R R R
G G G G G G
B B B B B B
1212
CSP
1211
121
Multi-viewpoint 3D display terminal [1000]
Processor [101]
Register [102]
Video signal interface [140]
3D processing device [130]
Buffer [131]
......
Multi-viewpoint 3D display screen [100]
......
n
m

Fig. 1A

CP
i=6
R R R R R R
G G G G G G
B B B B B B
1212
CSP
1211
121
Multi-viewpoint 3D display terminal [1000]
Processor [101]
Register [102]
Eye positioning device [150]
Video Signal interface [140]
3D processing device [130]
Buffer [131]
......
Multi-viewpoint 3D display screen [100]
......
n
m

Fig. 1B

CP
i=6
R R R R R R
G G G G G G
B B B B B B
1212
CSP
121
1211
Multi-viewpoint 3D display terminal [1000]
Processor
[101]
Register
[102]
Eye Positioning data interface
[151]
Video signal interface
[140]
3D processing device
[130]
Buffer
[131]
......
Multi-viewpoint 3D display screen
[100]
......
n
m

Fig. 1C

Multi-viewpoint 3D display terminal [200]
Antenna[209]
Antenna[211]
Mobile communication module 2G/3G/4G/5G [208]
Wireless communication module WLAN/NFC/GNSS/IR/BT/FM [210]
Loudspeaker[213]
Telephone receiver[214]
Microphone[215]
Earphone jack[216]
Audio Modu -le [212]
Eye positioning device [150]
Multi-viewpoint 3D display screen [100]
3D processing device [130]
Video signal inter- face [140]
Shooting unit[221]
Indicator [219]
Motor [218]
Key[217]
Memory [203]
SIM card interface [220]
External memory interface[202]
USB interface[204]
Charging input
Charging management module [205]
Power supply management module [206]
Battery[207]
Processor [201]
Register [222]
GPU [223]
Codec [224]
Sensor module [230]
Proximity light sensor [2301]
Ambient light sensor [2302]
Pressure sensor [2303]
Air pressure sensor [2304]
Magnetic sensor [2305]
Gravity sensor [2306]
Gyroscope sensor [2307]
Acceleration sensor [2308]
Distance sensor [2309]
Temperature sensor [2310]
Fingerprint sensor [2311]
Touch sensor [2312]
Bone conduction sensor [2313]

Fig. 2

Application program layer
Bluetooth
WLAN
Navigation
Music
Camera
Calendar
Calling
Video
Map depot
Map
Short message
310
Framework layer
Resource manager
Phone manager
Content manager
Notice manager
Window manager
View system
Installation packet manager
320
Core class library
3D graphic processing library
Surface manager
Runtime
Image processing library
Media library
2D graphics engine
330
Kernel layer
Camera driver
Audio-video interface
Calling interface
Wifi interface
Sensor driver
Power management
GPS interface
340

Fig. 3

400
410
411
R
R
R
R
R
R
420
421
G
G
G
G
G
G
430
431
B
B
B
B
B
B

Fig. 4A

400
470
471
R
R
R
R
R
R
R
R
R
R
R
R
490
491
G
G
G
G
G
G
G
G
G
G
G
G
480
481
B
B
B
B
B
B
B
B
B
B
B
B

Fig. 4B

501
502

Fig. 5A

503
504

Fig. 5B

505

Fig. 5C

506

Fig. 5D

507

Fig. 5E

3D processing device [130]
3D processing device [130]
3D processing device [130]
3D processing device [130]
CP

Fig. 6

100
1211
120
1212
110
CP

Fig. 7A

P
CP
120
CSP
1212
120
1211
theta
121
CP

Fig. 7B

P
BWP
CP
EWP
theta
BWP
WP
CP
EWP

Fig. 7C

W
w1
w2
PA
h1
h2
H
θ
121
PB
R
G
B

Fig. 8A

PA
θ
R
R
R
R
R
R
G
G
G
G
G
G
B
B
B
B
B
B
R
R
R
R
R
R
G
G
G
G
G
G
PB
B
B
B
B
B
B

Fig. 8B

CP
V2
V2
CP
CP
V6
CP
V6

Fig. 9

**INTERNATIONAL SEARCH REPORT**

International application No.
**PCT/CN2020/133335**

**A. CLASSIFICATION OF SUBJECT MATTER**

H04N 13/302(2018.01)i; H04N 13/305(2018.01)i; H04N 13/366(2018.01)i; H04N 13/111(2018.01)i; H04N 13/139(2018.01)i; H04N 13/122(2018.01)i; H04N 19/597(2014.01)i

According to International Patent Classification (IPC) or to both national classification and IPC

**B. FIELDS SEARCHED**

Minimum documentation searched (classification system followed by classification symbols)

H04N; G02B

Documentation searched other than minimum documentation to the extent that such documents are included in the fields searched

Electronic data base consulted during the international search (name of data base and, where practicable, search terms used)

CNKI, CNPAT, WPI, EPODOC, IEEE: 3D, 3维, 三维, 立体, 多视点, 裸眼, 显示, 像素, 光栅, 角, 颜色, multi-view, display, Three-dimensional, stereo, pixel, raster, angle, color, colour

**C. DOCUMENTS CONSIDERED TO BE RELEVANT**

| Category* | Citation of document, with indication, where appropriate, of the relevant passages | Relevant to claim No. |
|---|---|---|
| PX | CN 211128026 U (BEIJING IVISUAL3D TECHNOLOGY CO., LTD. et al.) 28 July 2020 (2020-07-28)<br>entire document | 1-15 |
| A | CN 105572886 A (BOE TECHNOLOGY GROUP CO., LTD.) 11 May 2016 (2016-05-11)<br>description, paragraphs 0039-0064 | 1-15 |
| A | CN 102932646 A (SHANGHAI YIWEI VISION TECHNOLOGY CO., LTD.) 13 February 2013 (2013-02-13)<br>entire document | 1-15 |
| A | CN 110234002 A (SHENZHEN MAGIC DISPLAY TECHNOLOGY CO., LTD.) 13 September 2019 (2019-09-13)<br>entire document | 1-15 |
| A | CN 106959522 A (KINGZONE TECHNOLOGY (SHANGHAI) CO., LTD.) 18 July 2017 (2017-07-18)<br>entire document | 1-15 |
| A | CN 102857783 A (SHANGHAI EVIS TECHNOLOGY CO., LTD.) 02 January 2013 (2013-01-02)<br>entire document | 1-15 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 February 2021** | **03 March 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

International application No.
**PCT/CN2020/133335**

**C. DOCUMENTS CONSIDERED TO BE RELEVANT**

| Category* | Citation of document, with indication, where appropriate, of the relevant passages | Relevant to claim No. |
|---|---|---|
| A | US 6064424 A (U.S. PHILIPS CORPORATION) 16 May 2000 (2000-05-16) entire document | 1-15 |
| A | US 2004263968 A1 (KOBAYASHI, Masanori et al.) 30 December 2004 (2004-12-30) entire document | 1-15 |

Form PCT/ISA/210 (second sheet) (January 2015)

**INTERNATIONAL SEARCH REPORT**
**Information on patent family members**

International application No.
**PCT/CN2020/133335**

| Patent document cited in search report | | | Publication date (day/month/year) | Patent family member(s) | | | Publication date (day/month/year) |
|---|---|---|---|---|---|---|---|
| CN | 211128026 | U | 28 July 2020 | None | | | |
| CN | 105572886 | A | 11 May 2016 | US | 10670871 | B2 | 02 June 2020 |
| | | | | WO | 2017128753 | A1 | 03 August 2017 |
| | | | | CN | 105572886 | B | 11 December 2018 |
| | | | | US | 2018045968 | A1 | 15 February 2018 |
| CN | 102932646 | A | 13 February 2013 | CN | 102932646 | B | 08 July 2015 |
| CN | 110234002 | A | 13 September 2019 | None | | | |
| CN | 106959522 | A | 18 July 2017 | None | | | |
| CN | 102857783 | A | 02 January 2013 | CN | 102857783 | B | 08 April 2015 |
| US | 6064424 | A | 16 May 2000 | EP | 0791847 | B1 | 22 January 2003 |
| | | | | JP | 3940456 | B2 | 04 July 2007 |
| | | | | DE | 69718534 | D1 | 27 February 2003 |
| | | | | JP | 2007188097 | A | 26 July 2007 |
| | | | | EP | 0791847 | A1 | 27 August 1997 |
| | | | | JP | H09236777 | A | 09 September 1997 |
| | | | | DE | 69718534 | T2 | 06 November 2003 |
| | | | | JP | 4253345 | B2 | 08 April 2009 |
| US | 2004263968 | A1 | 30 December 2004 | US | 7245430 | B2 | 17 July 2007 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 2019112314271